(19) Europäisches Patentamt
European Patent Office
Office européen des brevets

(11) EP 0 856 542 A1

(12) EUROPEAN PATENT APPLICATION

(43) Date of publication:
05.08.1998 Bulletin 1998/32

(51) Int. Cl.[6]: C08G 81/02, C08G 77/442, C08F 283/12

(21) Application number: 97200240.6

(22) Date of filing: 31.01.1997

(84) Designated Contracting States:
AT BE CH DE DK ES FI FR GB GR IE IT LI LU MC NL PT SE
Designated Extension States:
AL LT LV RO SI

(71) Applicant: DSM N.V.
6411 TE Heerlen (NL)

(72) Inventors:
- Janssen, Koen Jan Gerarda
3740 Bilzen (BE)
- Bruls, Wilhelmus Gerardus Marie
6243 BE Meerssen (NL)
- Rauch, Theodoor Wilhelm Leonard
6063 AN Roerdalen (NL)
- Van Boggelen, Michel Paul
6162 GJ Geleen (NL)

# (54) Polyolefin polymer with good mechanical properties

(57) Polyolefin polymer in the form of a comb, star, nanogel or structural combinations thereof comprising a plurality of polyolefin arms, each independently selected from the group consisting of homo- and copolymers of substituted and unsubstituted 1-alkenes, coupled to a polymeric backbone, said backbone having repeating units containing a group selected from the group consisting of aliphatic groups, aromatic groups, heteroatom-containing groups and combinations thereof, the polyolefin polymer having a weight average molecular weight ($M_w$) of at least $250*10^3$ g/mol and less than $800*10^3$ g/mol, the polyolefin arm, before coupling, having a molecular weight ($M_w$) of at least $20*10^3$ g/mol, the ratio between the molecular weight ($M_w$) of the polyolefin polymer and the molecular weight of the polyolefin arm, before coupling, ($M_{w,\ polymer}/M_{w,\ arm}$) being higher than 2 and the molecular weight distribution of the polyolefin arm, before coupling, being at least 2 and at most 20.

EP 0 856 542 A1

## Description

The invention relates to a polyolefin polymer with good mechanical properties. The invention also relates to a composition comprising such a polyolefin polymer. The invention further relates to an article made of such a polyolefin polymer.

A polyolefin polymer with good mechanical properties, based on high molecular weight polyethylene as the olefin, is described in "Modern Plastics 1994, page B-5". This polymer has remarkably good mechanical properties for example high abrasion resistance, low-temperature toughness, low coefficient of friction and resistance to many chemicals.

A disadvantage of this polymer is that it, as a result of its high molecular weight, has essentially no flow above the melting point. As a consequence hereof the polymer cannot be processed with conventional techniques and special techniques have to be used, e.g. ram-extrusion or compression moulding and metalworking techniques.

The purpose of the invention is to provide a polymer with good mechanical properties, but which can be processed with conventional processing techniques or with special techniques but with a short(er) processing time.

This purpose is reached by a polyolefin polymer in the form of a comb, star, nanogel or structural combinations thereof comprising a plurality of polyolefin arms, each independently selected from the group consisting of homo- and copolymers of substituted and unsubstituted 1-alkenes, coupled to a polymeric backbone, said backbone having repeating units containing a group selected from the group consisting of aliphatic groups, aromatic groups, heteroatom-containing groups and combinations thereof, the polyolefin polymer having a weight average molecular weight ($M_w$) of at least $250*10^3$ g/mol and less than $800*10^3$ g/mol, the polyolefin arm, before coupling, having a molecular weight ($M_w$) of at least $20*10^3$ g/mol, the ratio between the molecular weight ($M_w$) of the polyolefin polymer and the molecular weight of the polyolefin arm, before coupling, ($M_{w, polymer}/M_{w, arm}$) being higher than 2 and the molecular weight distribution of the polyolefin arm, before coupling, being at least 2 and at most 20.

The polyolefin of the present invention has as the backbone a polymeric structure to which polyolefin pre-arms are linked. Here and hereinafter with "polyolefin pre-arm" is meant a polyolefin polymer derivatized so that it can react with a reactive polymeric backbone or a difunctional polymerizable monomer. The term "polyolefin arm" will, here and hereinafter, be used for the polyolefin that is coupled to the polymeric backbone. The backbone before coupling of the pre-arms will be referred to as "reactive polymeric backbone". The backbone after that the coupling is effected will be referred to as "polymeric backbone".

Another advantage of this kind of polymer is the fact that in its production process use can be made of a relatively low molecular weight polyolefin, which can easily be produced in a suitable polymerization plant and only after this preparation the molecular weight is being increased by either coupling with the reactive polymeric backbone (e.g. in solution) or by polymerizing a polyolefin pre-arm first derivatized with a difunctional polymerizable monomer (e.g. in solution), both routes with only a moderate increase in viscosity of the solution.

The polyolefin polymers of the present invention are useful in a wide variety of applications. Thus, the broad scope of application of the polyolefin polymers of the present invention is made possible by the ability to control in independent chemical reactions both the composition of the arms and the number of arms linked to the polymeric backbone.

Preferred polyolefin polymers have a molecular weight ($M_w$) of at least $300*10^3$ and at most $700*10^3$ g/mol, more preferred polyolefin polymers have a molecular weight of at least $350*10^3$ and at most $600*10^3$ g/mol. The higher the molecular weight of the polyolefin polymer, the better the mechanical properties, for example the better the wear resistance.

Through the use of a polymeric backbone, it is possible to obtain branched polymeric structures in which a relatively high number of arms can be provided on the polymeric backbone. The choice of the specific reactive polymeric backbone and/or its manner of preparation controls the branched structure as to comb, star, nanogel or structural combinations thereof. That allows for the preparation of polymers having relatively low viscosities compared to their linear counterparts at the same absolute molecular weight.

The choice of the reactive polymeric backbone and the specific functionalized polyolefin pre-arm is dependent on the intended end use of the branched polymer. Pre-arms and reactive polymeric backbones are chosen so that the chemical bond formed by coupling them, will be stable under the conditions of intended use.

Reactive polymers useful as backbones are preformed polymers with a known or selectable number of functional groups or chemically reactive sites that can be used to couple with the polyolefin pre-arm.

Alternatively, the backbone is formed by a polymerization reaction using a polyolefin pre-arm first derivatized with a difunctional polymerizable monomer, either alone or in combination with another monomer copolymerizable therewith. Selective use of the polymeric backbone allows one to control the distribution of the polyolefin arms, thus controlling the degree of branching (number of arms) and the type of branching that is, comb, star, nanogel or combinations thereof.

Reactive polymeric structures useful as backbones are polymers possessing functionality which is either (a) capable of directly reacting with unsaturation contained in a polyolefin pre-arm or (b) capable of undergoing coupling reactions with polyolefin pre-arms that have been derivatized for a compatible reaction with the functional group on the

reactive polymeric backbone. The reactive polymeric backbone provides a large number of coupling sites by which a large number of polyolefin pre-arms can be linked to the reactive polymeric backbone to thus enable control of both the extent of branching and the type of branched structure.

Reactive polymer structures useful as backbones in the practice of this invention are very broad. Examples include, but are not limited to the following classes: homo- or copolymers of polyhydrosilanes, polyacrylic and methacrylic acids, polyacrylates, polymethacrylates, polyvinyl alcohol, polyvinyl acetate, poly(vinyl acetals), poly(vinyl ketals), ethylene copolymers with ethylenically unsaturated carboxylic acids, esters, or anhydrides, styrene copolymers with ethylenically unsaturated carboxylic acids, esters, or anhydrides, dendrimers, polythiols, polyepoxides, poly- or extended isocyanates.

Use of a preformed reactive polymer as the backbone generally leads to a branched structure basically characterizable as a comb or star, depending to a significant degree on the molecular weight of the reactive polymeric backbone and the polyolefin pre-arms.

Star branched polymers are those wherein the backbone exists as a radial core having attached to it the polyolefin arms. Examples of reactive polymeric backbones that will generate a star structure are dendrimers and extended isocyanates or alternatively any backbone with a radial branched structure.

Comb branched polymers are those wherein the polymeric backbone is essentially linear and the polyolefin arms extend pendant from that linear backbone. Thus, polyhydrosilanes, polymethacrylates, and ethylene copolymers are typical examples of reactive polymeric backbones that will provide a comb structure.

Incorporation of a crosslinkable monomer during the coupling reaction can lead to a crosslinking of the comb or star structures via residual functionality on the backbone, thus generating a nanogel structure. The nanogel structure thus exists as a crosslinked core (crosslinkable monomer and backbone) with polyolefin arms attached to the core. Crosslink centers and thus a nanogel structure also result from reactions between a functionality internal to the polyolefin arm and a crosslinkable monomer. Regardless of the preparation technique, the nanogel structure will function as a star branched polymer. For that purpose, use can be made of conventional crosslinking agents well known to those skilled in the art, including such crosslinking agents as non-conjugated, unsaturated polyenes like 1,7-octadiene, ethylidenenorbornene, divinylbenzene, divinylsilane, tri- and tetravinylsilanes, trialkoxysilanes, trihalosilanes, alkoxyhalosilanes, $\alpha,\omega$-diaminoalkenes and $\alpha,\omega$-dicarboxyalkenes.

One suitable class of reactive polymeric backbones used in the practice of the present invention are polyhydrosilane polymers and copolymers containing a large number of repeating units containing a silicon-hydrogen bond. In general, it is preferred to use silicon-containing polymers having repeating units of the general formula:

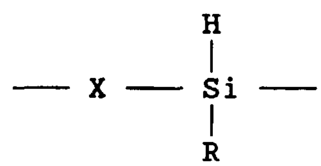

wherein X is a group containing a heteroatom, such as P, O, S, N, Si and/or one or more carbon atoms either as part of an aliphatic or aromatic group and R is hydrogen or an organic group, and preferably hydrogen, alkyl, aryl, cycloalkyl, alkoxy, aryloxy or cycloalkoxy.

Illustrative are polyhydrosiloxanes derived from an alkylhydrosiloxane end-capped with either a hydrosilane functionality or an alkylsilane or alkoxysilane functionality. Such polyhydrosiloxanes have the general formula:

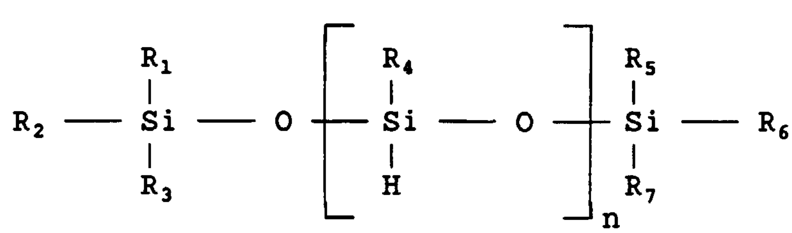

wherein $R_1$ to $R_7$ is each independently hydrogen or an organic group; preferably, $R_1$, $R_2$ and $R_3$ can be either hydrogen, alkyl, aryl, cycloalkyl, alkoxy, aryloxy or cycloalkoxy; $R_4$ is hydrogen, alkyl, aryl, cycloalkyl, alkoxy, aryloxy or cycloalkoxy; $R_5$ and $R_6$ are alkyl, aryl, cycloalkyl, alkoxy, aryloxy or cycloalkoxy and $R_7$ is hydrogen, alkyl, aryl,

cycloalkyl, alkoxy, aryloxy or cycloalkoxy; n is an integer having a minimum value of about 4, and preferably 10 or higher. Such polyhydrosiloxanes, as is well-known to those skilled in the art, are commonly available from a number of companies including Dow Corning and Rhone Poulenc.

As will also be appreciated by those skilled in the art, it is also possible to use, as the reactive polymeric backbone, siloxane copolymers containing 10 or more and typically 10 to 80 silicon-hydrogen groups as repeating units. As will also be appreciated by those skilled in the art, it is likewise possible to employ in place of the polyhydrosiloxanes described above, the corresponding analogs thereof in which at least part of the oxygen atoms is replaced by sulfur or nitrogen atoms.

Representative examples of suitable polyhydrosilane polymers are polymethylhydrosilane, polymethylhydrosiloxane, methylhydrodimethylsiloxane copolymer, methylhydrophenyl-methylsiloxane copolymer, methylhydrocyanopropylsiloxane copolymer, methylhydromethyloctylsiloxane copolymer, poly(1,2-dimethylhydrosilazane), (1-methylhydrosilasane)(1,2-dimethylhydrosilazane) copolymer and methylhydrocyclosiloxane polymer (a cyclic reactive polymeric backbone).

Preferably use is made of a backbone in the form of a polysiloxane.

In general, use is made of a silicon-containing polymer backbone having a number average molecular weight of 300 g/mol or higher, and preferably 500 to 10,000 g/mol.

In an alternative embodiment, the polymeric backbone is directly formed via a polymerization reaction (if desired in the presence of polymerizable monomers) of polyolefin pre-arms. Those pre-arms have been first derivatized with a difunctional polymerizable monomer leaving a polymerizable group capable of undergoing such polymerization reactions. Branched polymers thus formed will generally have comb structures. However, when the polyolefin pre-arm has a high molecular weight compared to the molecular weight of the backbone achieved during polymerization of the pre-arms; a physical star can be formed. In the event the polymerization reaction is carried out in the presence of a crosslinkable monomer a nanogel type structure will be formed. Thus, nanogel-type structures or a mixture of comb, star and nanogel will originate when combs and/or stars are further randomly branched by introduction of a crosslinkable monomer during preparation of the backbone.

The difunctional polymerizable monomer as used herein is a monomer possessing functionality that can selectively react with the (terminal) unsaturation or other (terminal) functionality of the polyolefin pre-arm, and possesses other secondary functionality, reactive via standard polymerization techniques such as cationic, anionic, free radical, Ziegler-Natta, etc., as a secondary reaction. Difunctional polymerizable monomers can be selected from the group comprising hydroalkoxysilanes, hydrohalosilanes, acrylic or methacrylic acids, their esters, amides, acid halides or anhydrides, vinyl acetate, vinyl alcohols, vinyl amines, vinylcyano compounds, vinyl isocyanates, vinyl thiols, vinyl epoxy compounds, etc.

Use of a polyolefin pre-arm allows for control of the polyolefin polymer composition independently of the reaction to form the polyolefin polymer. Derivatized as used herein likewise includes polyolefin pre-arms having (terminal) unsaturation, that is, the polymer contains a carbon-to-carbon double bound, C = C.

In the preferred practice of the present invention, the polyolefin pre-arm preferably contains, prior to derivatization or coupling with a reactive polymer or a difunctional polymerizable monomer, terminal unsaturation. That unsaturation is either vinyl, vinylidene, or vinylene unsaturation. Terminal unsaturation is preferred in order to reduce the steric effects resulting from reaction between two polymeric molecules. Wherever in the following the text refers to "terminal", the same teaching holds for polyolefin pre-arms, which have a functionality in the polymeric main chain, or in a (monomeric or polymeric) side chain.

Polyolefin pre-arms can be derivatized, for reaction with a reactive polymeric backbone or a difunctional monomer, by many types of chemical reactions. Convenient examples of functional groups introduced to the polyolefin pre-arm to effect coupling include, but are not limited to carbon-to-carbon unsaturation in the form of vinyl, vinylidene and vinylene bonds, hydroxy, amino, peroxy, carboxylic acid, ester, halide, anhydride, organoboron, cyano, isocyanato, carbon-carbon unsaturation that is polymerizable, thio, epoxy or aldehyde. Such derivatization methods will be presented in more detail as specific embodiments are defined.

The polyolefin pre-arms which can be used in the practice of the present invention depend in large measure on the properties desired in the branched polymer. In most embodiments, it is generally preferred, that the polyolefin pre-arms contain terminal unsaturation. This terminal unsaturation can for example be in the form of either vinyl, vinylidene, vinylene, or mixtures thereof.

Polymers of the present invention have polyolefin arms or branches each independently selected from the group consisting of homo- or copolymers of substituted or unsubstituted 1-alkenes. Here and hereinafter 1-alkene is meant to include ethylene. It is also possible to employ copolymers of one or more 1-alkenes with other unsaturated monomers copolymerizable therewith. Preferably polyolefin pre-arms are used that consist of homo- or copolymers of substituted or unsubstituted 1-alkenes with 2 to 20 carbon atoms.

In the case that use is made of propylene in a copolymer with ethylene, care should be taken that the amount of propylene in the copolymer is 28 wt% or lower or 50 wt% or higher. Preferably use is made of a propylene-ethylene

copolymer with the amount of propylene being 25 wt% or lower or 55 wt% or higher. More preferably use is made of a propylene-ethylene copolymer with the amount of propylene in the copolymer being 20 wt% or lower orp 60 wt% or higher. It has been found that when copolymers are used with between 20 wt% and 60 wt%, but certainly between 25 wt% and 55 wt%, and even more so between 28 wt% and 50 wt% of propylene, the polyolefin polymers obtained display a low abrasion resistance.

More preferably polyolefin pre-arms are used that consist of homo- or copolymers of substituted or unsubstituted 1-alkenes with 2, 4, 6, or 8 carbon atoms. More preferred are polyolefin pre-arms that consist of homopolymers of substituted or unsubstituted 1-alkenes with 2, 4, 6, or 8 carbon atoms. Although other 1-alkenes can also be used, 1-alkenes with more than 8 C-atoms become increasingly expensive. Most preferably polyolefin pre-arms are used that consist of polyethylene.

In addition, it is also possible to use, in combination with one or more of the monomers, that make up the homo- and copolymers described above, one or more polyenes which either may or may not be functionalized. Also suitable as comonomers in the formation of the polyolefin pre-arms are functionalized ethylenically unsaturated monomers capable of undergoing metallocene catalyzed polymerization in which the functional group may be one or more polar groups.

Further, it is also possible to use copolymers formed by the interpolymerization of ethylene, other 1-alkenes and at least one other polyene monomer. Such polymers are themselves well known to those skilled in the art and are typically prepared by using conventional Ziegler or metallocene polymerization techniques well known to those skilled in the art. This type of polymers will hereinafter be referred to as EP(D)M.

When using an interpolymer of ethylene, another 1-alkene and a polyene monomer, use can be made of a variety of polyene monomers containing two or more carbon-to-carbon double bonds containing 4 to 20 carbon atoms, including non-cyclic polyene monomers, monocyclic polyene monomers and polycyclic polyene monomers, as known to those skilled in the art. Representatives of such compounds include 1,4-hexadiene, dicyclopentadiene, bicyclo(2,2,1)hepta-2,5-diene, commonly known as norbornadiene, as well as the alkenylnorbornenes wherein the alkenyl group contains 1 to 20 carbon atoms and preferably 1 to 12 carbon atoms. Examples of some of the latter compounds includes 5-methylene-2-norbornene, 5-ethylidene-2-norbornene, vinylnorbornene as well as alkylnorbornadienes.

As known to those skilled in the art, it is also possible to include with certain Ziegler-Natta catalyst systems, as a comonomer in the polymerization of the polyolefin pre-arm, a small amount, typically up to 10 percent, of a functional ethylenically unsaturated monomer. Such monomers typically contain 2 to 20 carbon atoms and contain an ethylenically unsaturated group. Preferred functional ethylenically unsaturated monomers include acrylate and methacrylate esters wherein the esterrest group is $C_1$ to $C_{20}$ alkyl or $C_6$ to $C_{25}$ aryl including substituted aryl, vinylamines, vinylcyano-compounds and vinylesters. Representatives of suitable functional monomers which can be used in the practice of the present invention include methylmethacrylate, methylacrylate, N-vinylamine, N-vinylpyridine, acrylonitrile, vinylacetate, etc.

In a particular practice of the present invention, the polyolefin pre-arm is produced using a metallocene catalyst system. As used herein, the term "metallocene catalyst system" refers to and includes the use of a transition metal compound comprising a metal from groups 3-6 of the Periodical Table, such as titanium, zirconium, chromium, hafnium, yttrium containing at least one coordinating ligand that is a highly conjugated organic compound (e.g., cyclopentadienyl or indenyl). Such catalyst systems are themselves known and are described in the following published applications, the disclosures of which are incorporated herein by reference: EP-A-347.129; EP-A-69.951; EP-A-468.537; EP-A-500.944; and PCT/NL/93/00229. Also the process as disclosed in WO 96-23010 is suitable.

In addition, other Ziegler catalyst systems likewise known in the art as producing polyolefins with (terminal) unsaturation can likewise be used in the practice of this invention. One such example is titaniumchloride supported on magnesiumchloride and used in high temperature (greater than 100°C) polymerization systems. Another example is the copolymerization of ethylene with higher 1-alkenes using $VOCl_3$ and diethylaluminumchloride. In general, the choice of catalyst system and polymerization conditions will depend on the specific type of polyolefin pre-arm desired, as known to those skilled in the art of (Ziegler-Natta) polymerization technology. Thus, the composition of the (pre-)arms is dependent on the limits of Ziegler-Natta polymerization technology and can be controlled independently of the composition of the backbone.

Because the concepts of the present invention make it possible to introduce in a controlling fashion large numbers of polyolefin pre-arms, the properties of the polyolefin arms linked to the polymeric backbone dominate the properties of the resulting polyolefin polymer. Whenever needed, it is possible to use two or more pre-arms that differ in chemical composition, for example by using a blend when coupling the pre-arm with the backbone. Thus, the molecular weight of the polyolefin pre-arms can, within certain borders, be varied to control the properties desired in the overall polyolefin polymer.

Similarly, the method of preparation of the pre-arms can be used to, in part, control the properties of the pre-arms. In general, the lengths of the pre-arms, expressed as the weight average molecular weight, $M_w$, can be varied within broad limits, depending on the properties desired. As a general rule, use is made of polymer pre-arms having a $M_w$ of

at least $20*10^3$ g/mol. Preferably use is made of polymer pre-arms with an average molecular weight ($M_w$) of at least $30*10^3$ and at most $200*10^3$ g/mol and more preferably use is made of polymer pre-arms with an average molecular weight ($M_w$) of at least $50*10^3$ and at most $150*10^3$ g/mol. The molecular weight of the pre-arm is determined before the pre-arms are coupled to the backbone.

The molecular weight distribution (MWD) of the pre-arms is measured before the pre-arms are coupled to the backbone. The MWD is the ratio between the weight average molecular weight ($M_w$) and the number average molecular weight ($M_n$), as determined by size exclusion chromatography-differential viscometry (SEC-DV). The MWD of the (pre-)arms can be very broad, and is controlled at a level of at least 2 and at most 20. Preferably pre-arms that have a MWD of at least 2.5 and at most 16 are used, most preferred are pre-arms with a MWD of at least 6 and at most 15. With a broad MWD, the possibility of an increased number of pre-arms with a molecular weight at the higher end of the molecular weight distribution, is higher. As a result of the presence of these pre-arms, the efficiency of the coupling reaction is decreased, because it is more difficult to couple a (relatively) higher molecular weight pre-arm to the reactive polymeric backbone than a (relatively) lower molecular weight pre-arm.

The chemical reactions employed in the practice of this invention to couple the polyolefin pre-arm with the reactive polymeric backbone are generally known. Reaction times will generally be much longer in the practice of this invention than that practiced for the same chemical reaction with conventional monomeric chemicals.

As will be appreciated by those skilled in the art, as the molecular weight of the polyolefin pre-arm to be coupled with the backbone increases, the number of (terminal) double bonds in the polyolefin pre-arm decreases on a weight basis. That in turn results in a reduction of the coupling efficiency of the polyolefin pre-arms to the polymeric backbone. Thus, longer reaction times are required to produce the polyolefin polymer of the invention.

Similarly, steric factors can play a role in reducing the coupling efficiency, making it more difficult to couple the polyolefin pre-arm to adjacent functional groups in the backbone.

In short, the greater the molecular weight of the polyolefin pre-arm to be coupled with the backbone, the greater is the reaction time in affecting that coupling and the less complete is the substitution of polyolefin pre-arms on the functional groups of the backbone.

The number, in the backbone, of repeating units with functionality capable of being coupled to a polyolefin pre-arm depends, to some degree, also on the intended application of the polymer. As a general rule, it is preferred that the ratio between the molecular weight ($M_w$) of the polyolefin polymer and the molecular weight ($M_w$) of the polyolefin arm, before coupling, ($M_{w, polymer}/M_{w, arm}$, which can be regarded as the measure for the number of arms that is coupled to the polymeric backbone), is higher than 2. It is preferred that the ratio between the molecular weight ($M_w$) of the polyolefin polymer and the molecular weight ($M_w$) of the pre-arm is at least 5, it is even more preferred that the ratio between the molecular weight ($M_w$) of the polyolefin polymer and the molecular weight ($M_w$) of the pre-arm is at least 10. The higher the number of arms, the lower can be the molecular weight of the pre-arms, to reach the same high molecular weight of the polyolefin polymer. The lower the molecular weight of the pre-arms, the easier is the manufacturing.

The number of functional groups in the reactive polymeric backbone is at least the number of polyolefin pre-arms that will be coupled to the reactive polymeric backbone. That is so because, in most of the embodiments of this invention, the reaction to couple the polyolefin pre-arm to the reactive polymeric backbone is not quantitative with respect to utilization of backbone functionality. As explained above, the molecular weight of the polyolefin pre-arm can reduce the coupling efficiency of high molecular weight polyolefin pre-arms to the reactive polymeric backbone; that effect is often reinforced by steric factors associated with the coupling site on the reactive polymeric backbone and can prevent, with higher molecular weight polyolefin pre-arms the coupling of polyolefin pre-arms to immediately adjacent functional groups in the reactive polymeric backbone. In accordance with a preferred embodiment of the invention, the pre-arms can be linked to a silicon-containing reactive polymeric backbone described above by reacting its (terminal) unsaturation with the Si-H bond present in repeating units in the polyhydrosilane backbone (a polysiloxane-type backbone is created). As is well known to those skilled in the art, the reaction between the (terminal) unsaturation of the pre-arms and the Si-H bond of the polyhydrosilane can be carried out under conditions of heat. It is generally preferred to carry out the reaction (hydrosilylation) under the influence of a suitable catalyst to effect addition of the polyhydrosilane to the (terminal) unsaturation of the polyolefin pre-arm. Suitable hydrosilylation catalysts to effect that reaction are known in the art and include metals from groups 8 to 10 of the Periodic Table of the Elements, (in Handbook of Chemistry and Physics 70th edition, CRC press, 1989-90), including catalysts based on palladium, platinum or nickel. Catalysts which have been found to be particularly effective are $H_2PtCl_6 \cdot xH_2O(x \geq O)$, $K[Pt(C_2H_4)Cl_3]$, $RhCl(PPh_3)_3$ or $Co_2(CO)_8$. Such catalysts and their use are described in the literature such as Lukevics et al. in J. Organomet. Chem. Lib. 1977, 5, pages 1-80. Preference is given to Pt-containing catalysts. Such catalysts are described in e.g. USP 5,486,637.

The reaction can be carried out in accordance with a variety of reaction conditions as described in the art. It is generally possible, and sometimes desirable, to carry out the reaction in the presence of a solvent, for example aliphatic hydrocarbons (e.g. pentane, hexane, heptane, pentamethylheptane or distillation fractions), aromatic hydrocarbons (e.g. benzene or toluene), halogenated derivatives of aliphatic or aromatic hydrocarbons (e.g. tetrachloroethylene) or ethers (e.g. tetrahydrofuran or dioxane). The properties of the pre-arm and the polyhydrosilane are controlled to ensure

that the desired number of polyolefin pre-arms becomes linked by the addition reaction to the reactive polymeric backbone. The solution reaction is generally carried out at a concentration of 2 to 50 weight percent of polymeric reactant.

The polymeric reactants are ratioed according to the moles of (terminal) unsaturation (C=C) in the polyolefin pre-arm to the moles of Si-H bonds in the polyhydrosilane. Because the coupling of polyolefin pre-arms to the hydrosilane groups present in the reactive polymeric backbone controls the number of arms linked to the backbone, a molar excess of polyolefin pre-arms ensures the maximum number of polyolefin arms linked to the polymer backbone, when maximum branching is desired. In general, mole ratios ranging from 1:100 to 10:1 are employed.

The reaction temperature is not a critical variable, and depends somewhat on the reactants used in carrying out the coupling reaction. Generally, temperatures ranging from 15 to 300°C can be used for that purpose. Similarly, the reaction time is likewise not critical and depends on the reactants employed. As a general rule, reaction times are those sufficient to couple the polyolefin pre-arm to the reactive polymeric backbone, and generally range from 10 seconds up to 300 hours.

As will be appreciated by those skilled in the art, the foregoing reaction generates a mixture of products, depending on the structure of the polymer backbone and the structure of the polyolefin pre-arm. Nonetheless, one of the principal reactions which proceeds is the addition of the hydrosilane group to the (terminal) unsaturation of the polyolefin pre-arm. For example, those pre-arms containing (terminal) vinylidene unsaturation react according to the following equation:

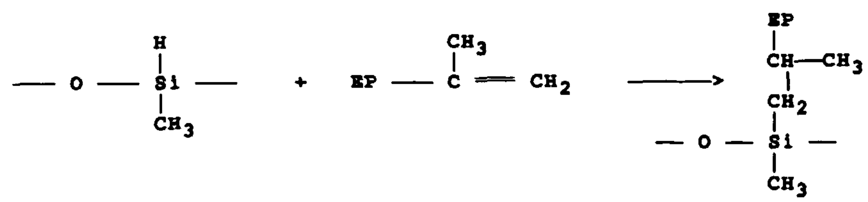

while the reaction with a (terminal) vinyl unsaturation proceeds according to the following equation:

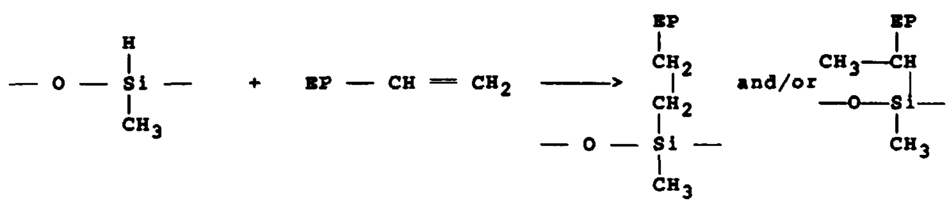


wherein EP represents the remainder of the polyolefin pre-arm.

In accordance with one variation of this embodiment of the invention, it is also possible to produce polymers of the same type by a different route in which the polyolefin pre-arm is reacted with a difunctional polymerizable monomer in the form of a monomeric hydrosilane compound containing a Si-H group, which is then either homopolymerized or copolymerized with other silicon-containing compounds in a conventional manner. This concept of the invention thus involves the coupling of a polyolefin pre-arm with a monomeric hydrosilane having the structure:

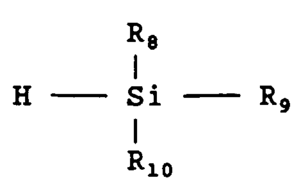

wherein $R_8$ and $R_9$ are each a hydrolyzable group such as a halogen atom and preferably chlorine or a lower alkoxy group containing 1 to 6 carbon atoms and $R_{10}$ is a hydrolyzable group as described above or hydrogen, alkyl, aryl or cycloalkyl.

Thus, the reaction, when the polyolefin pre-arm contains vinylidene (terminal) unsaturation, proceeds as follows:

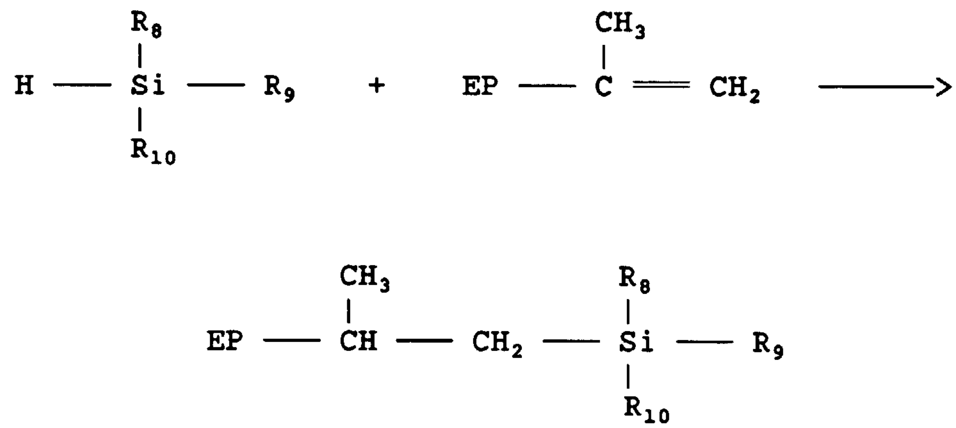

The resulting silane-terminated polyolefin can then be reacted, typically in the presence of water, to homopolymerize the silane and form the corresponding polyolefin polymer containing polyolefin arms and a silane polymer backbone. It should be understood, however, that it is possible, and sometimes desirable, to utilize silanes different from that with which the polyolefin pre-arm is coupled which then can be copolymerized to form a polysilane backbone structure, having a random distribution of polyolefin arms emanating therefrom.

Optionally, if a nanogel type of polyolefin polymer is desired, one would add to the reaction sequence just described a small amount of a crosslinking monomer in the form of a tri- or tetra-alkoxysilane, a trihalosilane, an alkoxyhalosilane, multi-functional silylamines and amides, etc. so that the heteroatoms of one monomer react with the heteroatom attached to -Si- of another monomer to form a hydrophilic core of Si-heteroatom groups with polyolefin arms attached thereto. As will be appreciated by those skilled in the art, the terminally unsaturated polyolefin pre-arm can be reacted directly with the crosslinking monomer in the presence of water to form a nanogel polyolefin polymer.

It is also possible to copolymerize, with the polyolefin-substituted silane, other hydrolyzable silanes to form a silane copolymer backbone, the units of which contain polyolefin arms emanating therefrom along with repeating units from the other hydrolyzable silanes which have been copolymerized therewith. For example, it is possible to copolymerize a polyolefin-substituted silane illustrated above with, for example, dimethyldichlorosilane in which some of the repeating units of the polymer backbone contain polyolefin arms emanating therefrom while others derived from the dimethyldichlorosilane contain methyl groups appended to the silicon atom.

The conditions under which the polyolefin pre-arm is reacted with the hydrosilane monomer are like those described above for reaction between the polyolefin pre-arm and the polyhydrosilane.

In accordance with another concept of the present invention, it is possible to utilize other chemical reactions or coupling techniques to link the polyolefin pre-arm to a reactive polymer. In accordance with one embodiment, it is possible to employ, as the reactive polymeric backbone, polymers of acrylic and methacrylic acid either as a homopolymer or as a copolymer with other acrylic and/or methacrylic type monomers. The acrylic and methacrylic polymers used in this embodiment of the invention are those derived from the monomeric unit having the structure:

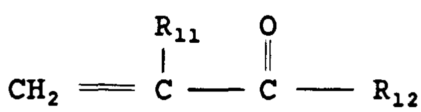

wherein $R_{11}$ is either hydrogen or lower alkyl ($C_1$-$C_{12}$, e.g., methyl) and $R_{12}$ is an OH group, a halogen group and preferably chlorine, an alkoxy group, or an aryloxy group. Representatives of such compounds include acrylic acid, methacrylic acid, acrylylchloride and methacrylylchloride along with various esters of either acrylic or methacrylic acid including the alkyl- and aryl- ester derivatives of the two acids. As a comonomer, use can be made of amino- or hydroxyalkylacrylates and -methacrylates. It is sometimes desirable to employ, when using the ester, an ester-leaving group to facilitate transesterification with a functionalized polyolefin pre-arm as will be described more fully hereinafter. Suitable ester-leaving groups are well known to those skilled in the art, and include tosylates and mesylates as examples.

The polyacrylic or polymethacrylic backbone embodied in the practice of the present invention should have a

molecular weight sufficient to provide at least 10 and preferably at least 25 acid, acid chloride or ester groups in each backbone polymer chain. Such polymers have molecular weights $M_n$ typically ranging from 1,000 to 40,000 g/mol.

The coupling of the polyolefin pre-arm to the acid, acid chloride or ester functionality of the reactive polymeric backbone can be achieved by first functionalizing the polyolefin pre-arm prepared as described above to introduce either a (terminal) amine group or a (terminal) hydroxygroup, each of which is capable of undergoing reaction with the functional group contained in the polyacrylic or polymethacrylic backbone. Preferably, the hydroxy terminated polyolefin pre-arm is converted to a lithiumalkoxide by reaction with n-butyllithium, followed by reaction with acrylylchloride or methacrylylchloride.

One such technique for converting the (terminal) unsaturation of the polyolefin pre-arm to either an amine- or a hydroxycompound is by hydroboration. In that technique, a hydroboration reagent is added across the (terminal) double bond of the polyolefin pre-arm to form an organoborane derivative which can then be converted to the corresponding hydroxy compound using alkaline hydrogenperoxide or to the corresponding amine using ammonium hydroxide + sodium hypochlorite. Those reactions can be illustrated by means of the following equation:

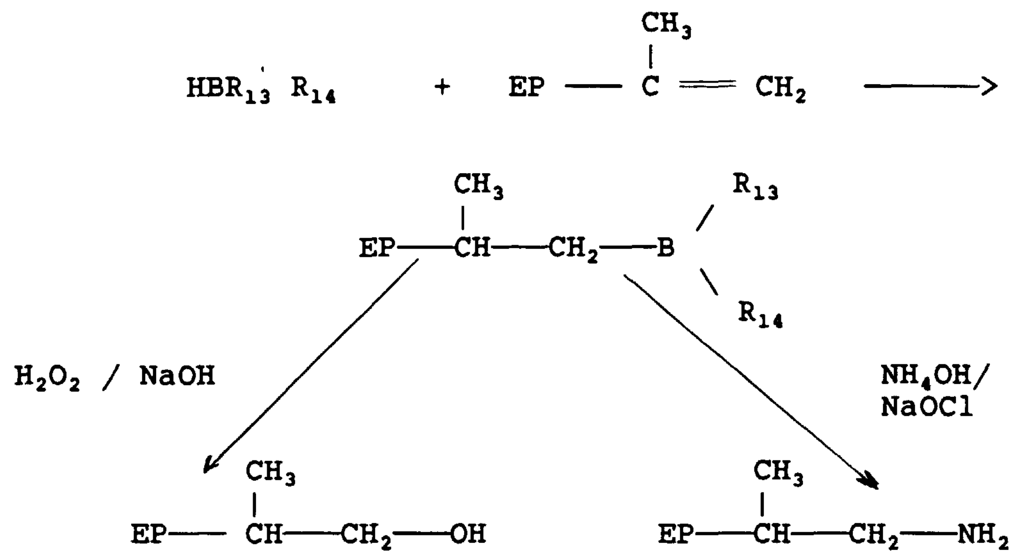


wherein $R_{13}$ and $R_{14}$ are each hydrogen and/or organic groups bonded to the boron in the hydroboration reagent. A number of such hydroboration agents are well known to those skilled in the art and can be found and their utility described in H.C. Brown, "Organic Synthesis Via Boranes", Wiley 1975. One such hydroboration reagent which can be effectively used in the practice of the present invention is 9-boronbicyclo-[3.3.1]nonane, (9-BBN).

Once converted to the corresponding hydroxy- or amine-terminated polyolefin pre-arm, this pre-arm can then be reacted with the polyacrylic or polymethacrylic backbone in accordance with conventional techniques by which the functional group of the reactive polymer, a carboxylic acid group, an acid chloride group or an estergroup reacts with the polyolefin pre-arm in the form of a hydroxy terminated compound to form the corresponding ester polyolefin arms linked to the acrylic or methacrylic polymer backbone. Similarly, the same functional groups react with an amine terminated polyolefin pre-arm to form the corresponding amide, thereby linking the polyolefin arm to the polymer backbone. Conventional esterification and amidation reaction conditions, generally in solvent, may be used to effect that coupling reaction.

Instead of using, as the polymer backbone, homopolymers of acrylic or methacrylic acid, acid chlorides or esters, use can be made, in accordance with another embodiment of the invention, of copolymers of the foregoing acrylic or methacrylic acids, acid chlorides or acid esters. Such copolymers are formed from one or more polymerizable ethylenically unsaturated monomers capable of undergoing an anionic or free radical polymerization. Preferred among comonomers with acrylic and methacrylic monomers as described above are ethylene and lower 1-alkenes for example propylene and 1-butene, styrene and styrene derivatives such as $\alpha$-methylstyrene, vinyl ethers and vinyl cyano compounds such as acrylonitrile and methacrylonitrile. Other comonomers useful in the practice of this invention as copolymerizable with the acrylate and methacrylate monomers include unsaturated diacids, diesters, anhydrides such as fumaric, itaconic, maleic anhydride, a broad range of vinyl monomers such as vinyl acetate, vinylimidazole, vinyl pyridine, methyl vinyl ketone, allyl glycidyl ether, and acrylamide. The amount of one or more of the foregoing comonomers is not critical and can be varied within relatively wide ranges. In general, use can be made of 20 to 80 percent of the acrylic or methacrylic monomer and 80 to 20 percent of one or more of the foregoing comonomers. Once again, it is

preferred to employ, as the reactive polymeric backbone, copolymers having molecular weights ($M_n$) ranging from $1*10^3$ to $40*10^3$ g/mol.

As will be appreciated by those skilled in the art, the polyolefin pre-arm can be coupled to such copolymers in the same manner as they are coupled to the acrylic and methacrylic homopolymers as described above. In either case, use is made of a molar ratio of the functionalized polyolefin pre-arm to acid, acid chloride or ester functionality or the reactive polymeric backbone to ensure the desired number of arms coupled to the back-bone; this ratio is in the range of 1:100 to 10:1.

Polyolefin polymers of the foregoing types can also be prepared by the alternative route in which a (terminal) amine, hydroxy, or lithium alkoxy functional polyolefin pre-arm is first reacted with a difunctional polymerizable monomer. In this embodiment, it is convenient to use an acrylic or methacrylic monomer to couple the polyolefin pre-arm through either an ester or amide coupling linkage. Once coupling of the polyolefin pre-arm is accomplished, the resulting coupled monomer can then be subjected to conventional free radical or anionic polymerization either alone or in combination with one of the foregoing comonomers to form the corresponding polymers with polyolefin arms emanating from the repeating units derived from the acrylic or methacrylic monomer. Particularly, ethylene glycol dimethacrylate which leads to secondary coupling of the comb structures can be used to give a nanogel type branched polyolefin. Once again, the reaction techniques for effecting that polymerization reaction are conventional and can be found in the literature describing conditions to effect free radical and anionic polymerization of acrylic and methacrylic monomers. See, for example, the Encyclopedia Of Polymer Science & Engineering, (1988), John Wiley & Sons, Inc., Vol. 13, pp. 1702-1867 and Vol. 1, pp. 221-224, 235-251 (Bamford).

In accordance with another embodiment of the invention, use can also be made of a reactive polymeric backbone in the form of copolymers of maleic anhydride and ethylene or copolymers of maleic anhydride, ethylene and one or more of a lover alpha-olefins such as propylene and 1-butene or styrene. In accordance with this concept of the invention, use can be made of copolymers containing 85 to 95 % of ethylene and 15 to 5 % of maleic anhydride. The polyolefin pre-arms, which have been functionalized to introduce either a hydroxy or an amine group can thus be coupled to the ethylene/maleic anhydride copolymer by means of ester and/or amide linkages. Alternatively, when using polyolefins functionalized with an amine, it is also possible to couple the polyolefin pre-arm to the ethylene maleic/anhydride copolymer backbone by means of imide linkages. The reaction of an amine-functionalized polyolefin pre-arm with an ethylene/maleic anhydride copolymer to form the corresponding imide may be represented by the following equation:

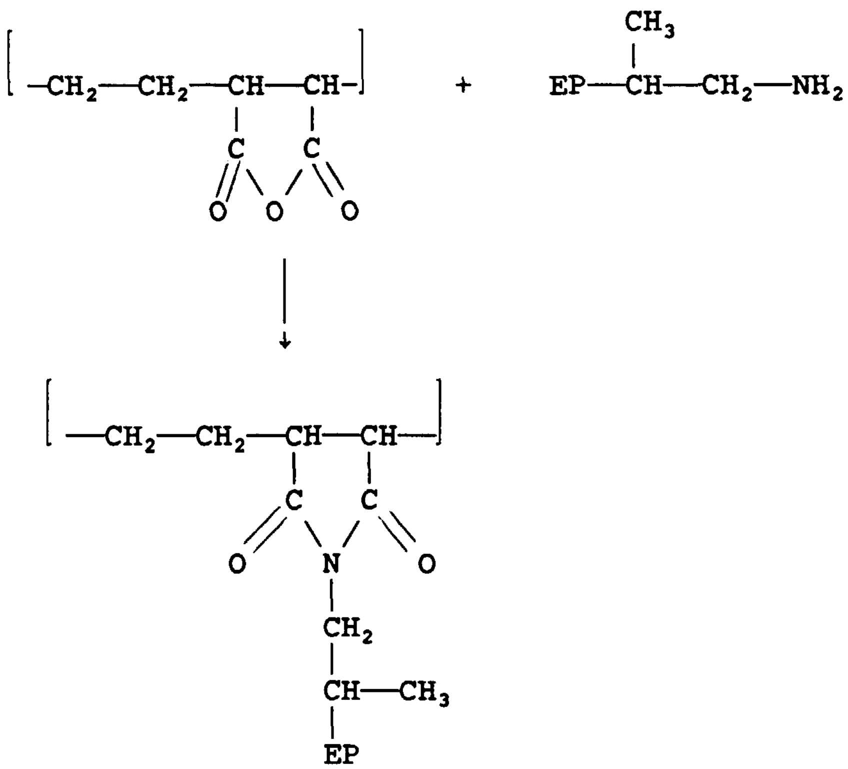

Once again, the reaction conditions for coupling hydroxy or amine functionalized polyolefin pre-arms are conventional.

As an alternative to the ethylene/maleic anhydride copolymers, use can also be made of the styrene/maleic anhydride copolymers, referred to as SMA polymers. Included as SMA polymers are those where the styrene in part may be substituted by other aryl olefins such as α-methyl styrene, vinyl naphthalene, alkyl styrenes, vinyl alkyl naphthalenes, halogen substituted styrenes, etc. In accordance with this concept of the invention, use can be made of copolymers containing 90 to 65 weight percent of styrene and 10 to 35 weight percent of maleic anhydride. Additionally, 5 to 15 weight percent of the maleic anhydride may be prereacted with simple amines such as ammonia, aniline, N-alkyl amines, alkyl substituted anilines to form the corresponding maleimide group in the SMA polymer. The SMA polymers useful in the practice of this invention can have a $M_n$ of 500 to 55,000 g/mol. Polyolefin pre-arms, which have been functionalized to introduce a (terminal) hydroxy or amine group, can thus be coupled to the SMA polymers through coupling with the maleic anhydride groups to form an ester, amide, or imide linkage as described previously for the ethylene/maleic anhydride backbone.

Polyolefin polymers similar to those just described can be prepared by use of α,β-unsaturated anhydrides such as maleic anhydride as a difunctional polymerizable monomer for reaction with amine or hydroxy (terminal) polyolefin pre-arms. The amine or hydroxy groups react to provide new unsaturated polyolefin pre-arms with either an imide or an anhydride, ester bond. The unsaturation in the new pre-arm can be subjected to conventional free radical or anionic polymerization conditions either alone or with ethylene or styrene, to make copolymer backbones. Alternatively, other monomers copolymerizable with ethylene and/or styrene, for example acrylates and methacrylates, can be used to make a terpolymer backbone.

In accordance with a further embodiment of the invention, it is possible, and sometimes desirable to use, as the reactive polymeric backbone, partially hydrolyzed polymers of vinyl acetate. As is well known to those skilled in the art, vinyl acetate can be polymerized by means of a free radical polymerization mechanism to form polyvinyl acetate which can then be substantially or completely hydrolyzed using either acidic or basic conditions to remove acetyl groups pendant on the polymer backbone leaving pendant hydroxy groups. Typically, polyvinyl acetate can be hydrolyzed to the extent of 50 to 80 percent in the practice of the present invention. Thus, the polymer employed as the reactive polymeric backbone contains 50 to 80 percent alcohol groups and 20 to 50 percent vinyl acetate groups. Such products are commercially available from a variety of sources.

In one variation, the vinyl acetate-vinyl alcohol polymer employed as the reactive polymeric backbone in the practice of the present invention can be converted by reaction with a $C_1$-$C_4$ aliphatic aldehyde or ketone to form the corresponding acetal or ketal, respectively. Such reactions and the polymers produced therefrom are well known to those skilled in the art and are commercially available from a variety of sources. Such polymers are referred to as poly(vinyl acetals) or poly(vinyl ketals) and generally contain the structure:

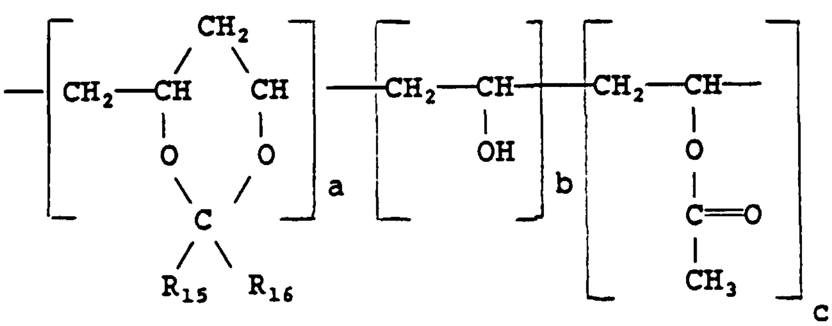

wherein $R_{15}$ and $R_{16}$ are each hydrogen or $C_1$-$C_{10}$ alkyl (e.g., methyl, ethyl, etc.). Commercially available poly(vinyl acetals) and poly(vinyl ketals) typically contain 75 to 95 percent by weight of the acetal (or ketal) (a), 6 to 25 percent by weight of vinyl alcohol (b) and 0 to 13 percent by weight of vinyl acetate (c). Those proportions are not critical to the practice of the present invention and, as will be appreciated by those skilled in the art, proportions outside those ranges can likewise be employed. While it is not critical to the practice of the invention, it is generally preferred that the reactive polymeric backbone used in this embodiment has a number average molecular weight $M_n$ ranging from $1*10^3$ to $40*10^3$ g/mol.

The polyolefin pre-arm herein can be coupled to polyvinyl alcohol/vinyl acetate or to poly(vinyl acetals/ketals) in combination with either the vinyl alcohol group or the vinyl acetate group by means of a variety of techniques. For example, use can be made of a polyolefin pre-arm which has been functionalized to introduce a carboxylic acid group as described above or an acid chloride group. When the polyolefin pre-arm has been functionalized in that way, the carboxyl group is capable of reaction with either the hydroxy functionality of the vinyl alcohol by way of an esterification reaction or with an acetate group of vinyl acetate by way of a transesterification reaction in accordance with conventional techniques.

Alternatively, use can be made of a polyolefin pre-arm which has been functionalized to introduce an ester group, such as a simple aliphatic ester or, as is sometimes preferred, an ester containing an ester leaving group such as a tosylate group or mesylate group. Such ester groups are likewise capable of reaction with either the acetate functionality or the hydroxy functionality of the reactive polymeric backbone, again in accordance with well known techniques.

Another technique by which the polyolefin pre-arm can be coupled to the polyvinyl alcohol/acetate back-bone is by a reaction sequence employing a hydroxy functional polyolefin pre-arm. The (terminal) hydroxy group of the polyolefin pre-arm is converted to a tosylate by reactions with tosylchloride to generate a (terminal) tosyl group on the polyolefin pre-arm. That has the capability of reacting directly with the hydroxy functionality of the polyvinyl alcohol/acetate in the backbone to form the corresponding ether linkage or to undergo a transesterification reaction with the acetate group to form the corresponding ester linkage.

In accordance with yet another embodiment of the invention, use can also be made, as the reactive polymeric backbones, of the polymeric structures known in the art as dendrimers. Such dendrimers are described in, for example, USP Nos. 4,587,329 and 4,737,550 and WO93/14147 and WO95/02008, the disclosures of which are incorporated herein by reference.

Dendrimers are three-dimensional highly branched polymer molecules comprising a core, and radiating from the core molecule a number of generations of branches. The generations of branches are composed of repeating structural units linked via various functional groups and terminated in the final generation by a functional group.

As is described in the foregoing publications, dendrimers are macromolecules formed with the aid of alternate reaction steps, starting from a core or an initiator core. Typically, the reactions occurring during the synthesis of such dendrimers are virtually selective reactions; that means that no or virtually no undesired side reactions occur.

In the preferred practice of the invention, the core molecule is a molecule which preferably contains two or more functional groups, (that is, it may undergo two or more chemical reactions) and may range as high as ten or more functional groups. The core may be chosen from the group of ammonia, water, methanol, polymethylenediamines, diethylenetriamine, diethylenetetramine, tetraethylenepentamine, linear and branched polyethylene imine, methylamine, hydroxy-ethylamine, octadecylamine, polyaminoalkylarenes, such as 1,3,5-tris(aminomethyl)benzene, tris(aminoalkyl)amines, such as tris(aminoethyl)amine, heterocyclic amines, such as imidazolines and piperidines, hydroxyethylaminoethylamine, mercaptoethyl amine, morpholine, piperazine, pentaerythritol, sorbitol, mannitol, duleitol, inositol, polyalkylenepolyols, such as polyethylene glycol and polypropylene glycol, glycols, such as ethylene glycol, 1,2-dimercaptoethane, polyalkylene polymercaptans, phosphine, ε-aminocaproic acid, glycine, thiophenols, phenols, melamine and derivatives thereof, such as melamine tris(hexa-methylenediamine). In the process according to the invention, use is preferably made of a core that is chosen from the group comprising polymethylene diamines, glycols and 1,3,5-tris(aminoethyl)benzene (AEB). Polymethylenediamines, that are more preferably used as a core are hexamethylenediamine, ethylenediamine and 1,4-diaminobutane (DAB).

If so desired, it is also possible to use a copolymer containing the above functional groups as a core for the dendritic macromolecule. Examples of such copolymers are styrene-maleimide copolymer, polyethyleneimine and polymers such as polypropylene oxide, polystyrene and ethylene-propylene-diene copolymers that are functionalized with one or more of the above functional groups, such as $NH_2$ groups.

The core molecule is thereafter reacted with a polyfunctional compound, and preferably a polyfunctional compound which, when reacted with the core molecule, forms a dendrimer having either (terminal) amine groups, (terminal) hydroxy groups or other (terminal) functional groups such as alkylester groups. Thus, the dendrimer generations preferred for use in the practice of the present invention utilize, as the repeating unit, polyether , polyamidoamines, polyethyleneimines or polyalkylene- polyamines. One typical example of a dendrimer is formed with ammonia, as the core molecule. Ammonia is reacted, via a "Michael addition", with an excess of the polyfunctional compound methylacrylate, thus:

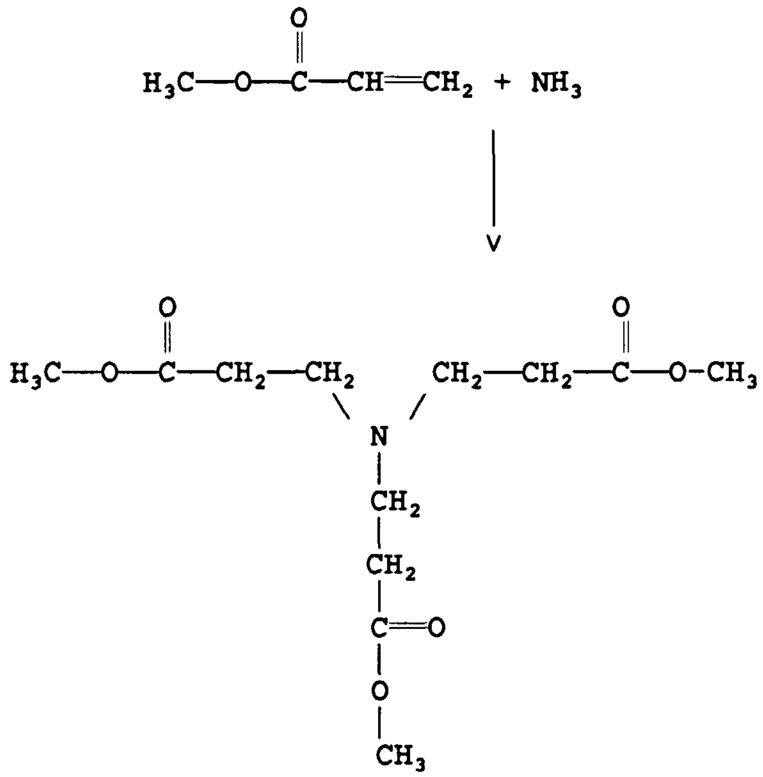

The foregoing structure is then next reacted with a polyfunctional compound such as an alkylenediamine to yield the following structure to form a polyamidoamine, thus:

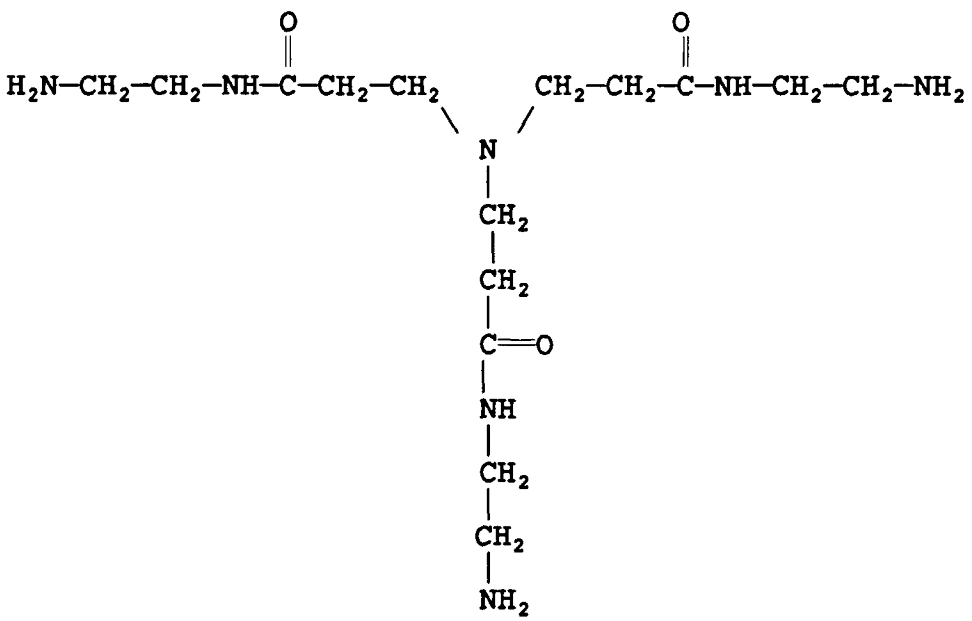

The above reaction sequence represents one generation.

Each generation thereafter is added by alternating reactions of methylacrylate and ethylenediamine. If desired, the polyfunctional compound can be changed at any point in the sequence to vary the structure being produced or alternatively the reaction sequence can be stopped at a half generation.

In general, use is made, as the polyfunctional compound, of a wide variety of compounds capable of reaction with the core in the ordered sequence outlined above. Polyfunctional groups which may be employed in the practice of the present invention are generally known in the prior art. For example, as described in USP No. 4,587,329, there is described polyfunctional groups containing functional groups such as amino, nitrile, hydroxy, mercapto, carboxy, carboxyalkyl, amido, halo, urea, oxiranyl, aziridinyl, oxazolinyl, imidazolinyl, sulfanato, phosphonato, isocyanato, isothiocyanato and combinations thereof. Alkylesters of acrylic and methacrylic esters are examples and can be used in combination with alkylenediamines as one example to add each generation to the dendrimer core. Other polyfunctional compounds may likewise be employed as are described in the literature. One example are the vinylcyanides having the structure:

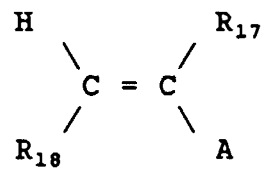

where $R_{17}$ = H or $-CH_3$; A = -C≡N; and $R_{18}$ is hydrogen or a hydrocarbon group with 1 to 8 carbon atoms.

Very suitable vinyl-cyanide units that can be used are acrylonitrile and methacrylonitrile.

As will be appreciated by those skilled in the art, a dendrimer can be produced by reaction of acrylonitrile with as the core 1,4-diaminobutane, according to the following reaction:

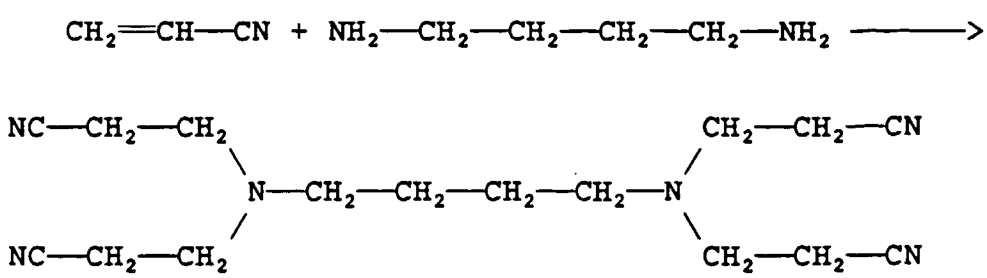

In the above structure, the cyano groups are hydrogenated to the corresponding amine groups to terminate the first generation. These amines are then capable of undergoing further reaction with a polyfunctional monomer, which may be either the same or different from the polyfunctional group used earlier in the sequence. For example, it is possible to react the foregoing amine terminated compound with additional quantities of acrylonitrile, or it is also possible to use a completely different difunctional monomer such as an alkylester or methylacrylate ester as described above. In general, the dendrimers employed in the practice of this invention have number average molecular weights ranging from 300 to 10,000 g/mol, once again, depending in part on the structures desired in the final macromolecule. The number of polyolefin pre-arms coupled to the dendrimer type of backbone will depend on the number of branches or endgroups in the dendrimer molecule. In the practice of this invention, dendrimers of 1 to 6 generations with 4 to 128 branches or end groups can find utility.

A number of different approaches can be taken in preparing dendrimers for use in the present invention. For example, 1,3,5-tris(aminomethyl)benzene can be reacted with acrylonitrile to form, as the second generation dendrimer, a dendrimer containing twelve amino groups:

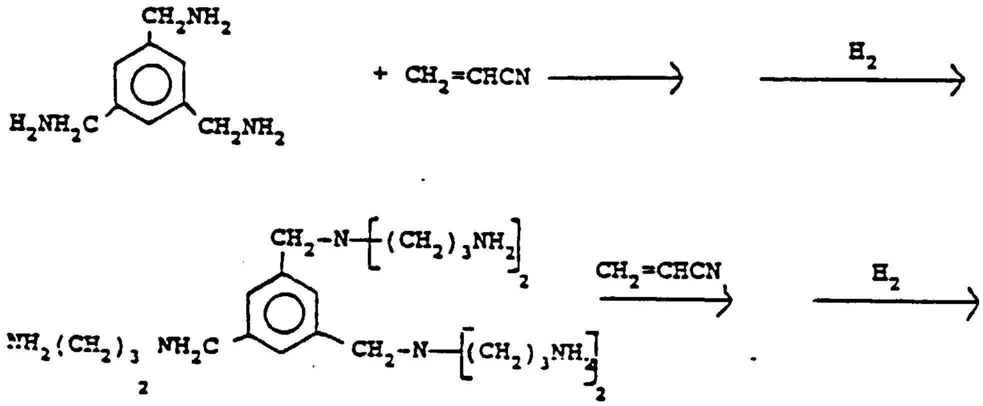
+ CH2=CHCN
H2
CH2=CHCN
H2

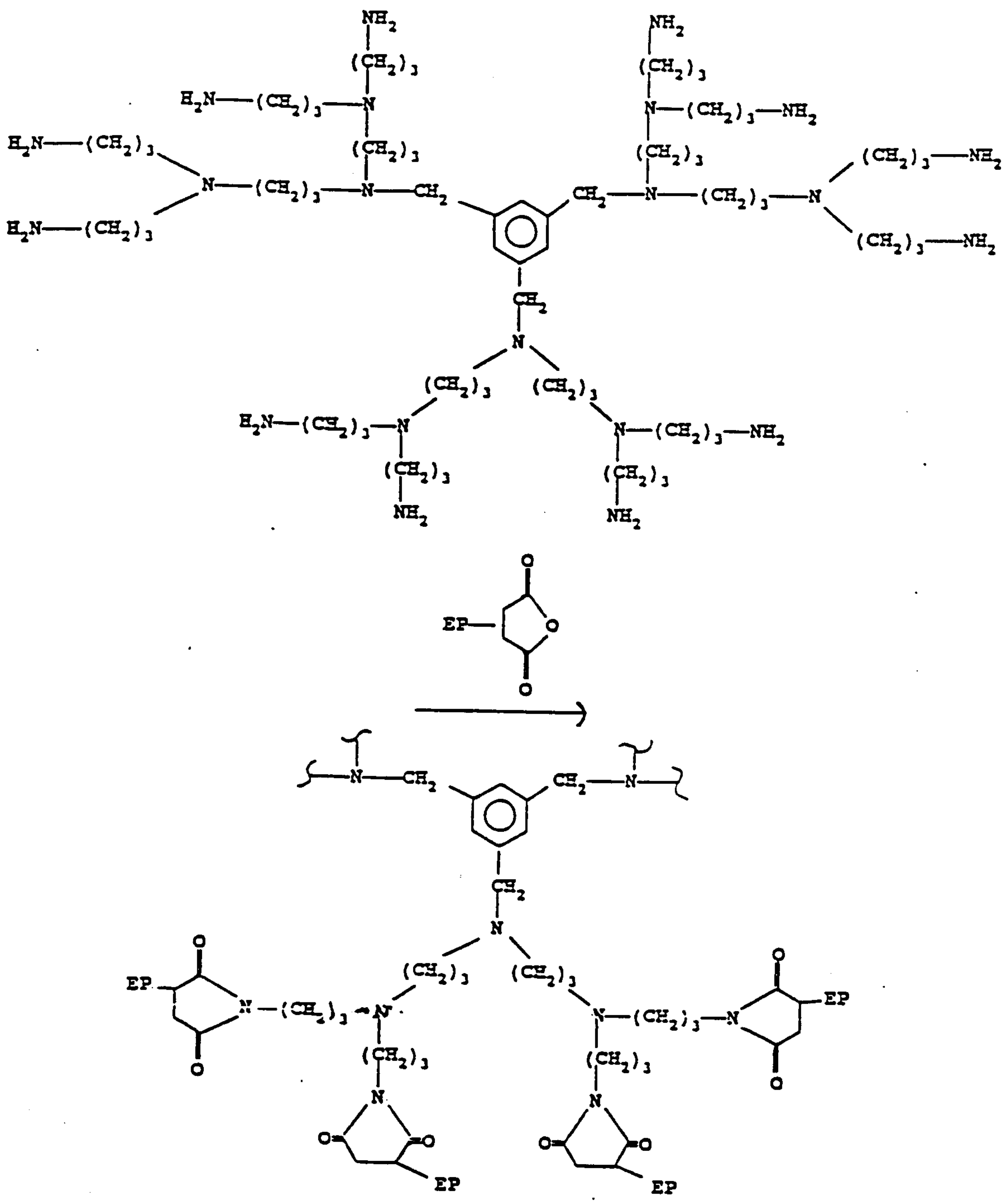

The polyolefin pre-arm can be coupled to the free amine or hydroxy groups of the foregoing dendrimers by first functionalizing the (terminal)ly unsaturated polyolefin to provide on the polyolefin a functional group capable of reaction with such amino or hydroxy groups. As is known to those skilled in the art, the polyolefin pre-arm can be functionalized to introduce a carboxylic anhydride group or an acid chloride group, either of which can be reacted with the amino or hydroxy group of the dendrimer to couple the polyolefin arm to the dendrimer to form a highly branched structure. The carboxyl group and/or the acid chloride can be conveniently produced by a number of techniques.

One technique is to carry out a hydroboration reaction and react the organoborane with carbon dioxide to form the corresponding acid group which can then be easily converted to its corresponding acid chloride. Alternatively, as described above, the polyolefin pre-arm can be reacted with maleic anhydride by way of, for example, an ene reaction. Alternatively, it is also possible to convert the polyolefin pre-arm to the corresponding aldehyde by means of a hydroformylation reaction using catalysts derived from cobalt or rhodium well known for that purpose. The aldehyde derivatized polyolefin pre-arm can then be reacted with the dendrimer containing (terminal) amine groups via a Schiff-base reaction to give an imine bond which alternatively can be hydrogenated for added heat stability or can provide a new double bond for other chemical modifications.

Alternatively, a hydroxy (terminal) polyolefin pre-arm can be converted to its tosylate by reaction with tosylchloride. The tosylate terminated polyolefin pre-arm can react with either an amine terminated dendrimer to form an amine linkage or with a hydroxy terminated dendrimer to form an ether linkage of the polyolefin pre-arm.

Alternatively, it is also possible to convert the polyolefin pre-arm to the corresponding epoxide which then is capable of reaction with either a free amino group or hydroxy group present in the dendrimer. Epoxidation can likewise be effected using peracid chemistry which is well known to those skilled in the art.

In each case, the derivatized polyolefin pre-arm is capable of reaction with the hydroxy or amino groups of the dendrimer backbone to form a polyolefin polymer having the dendrimer as the core or backbone with polyolefin arms extending therefrom. Polyolefin polymers of the same general type can also be prepared by extending the amine or hydroxy (terminal) group present in the dendrimer backbone with a molecule containing an isocyanate or isothiocyanate group. The free isocyanate or isothiocyanate group thus present in the new dendrimer backbone can be reacted with the polyolefin pre-arm which has been derivatized as described above to introduce either hydroxyl termination or amine termination, introduced in the polyolefin pre-arm by way of the hydroboration reaction described above. These polyolefin polymers have polyolefin arms coupled to the dendrimer backbone via the very thermally stable urethane or urea linkage. That series of reactions can be illustrated for a selectively blocked multifunctional isocyanate by way of the following equations:

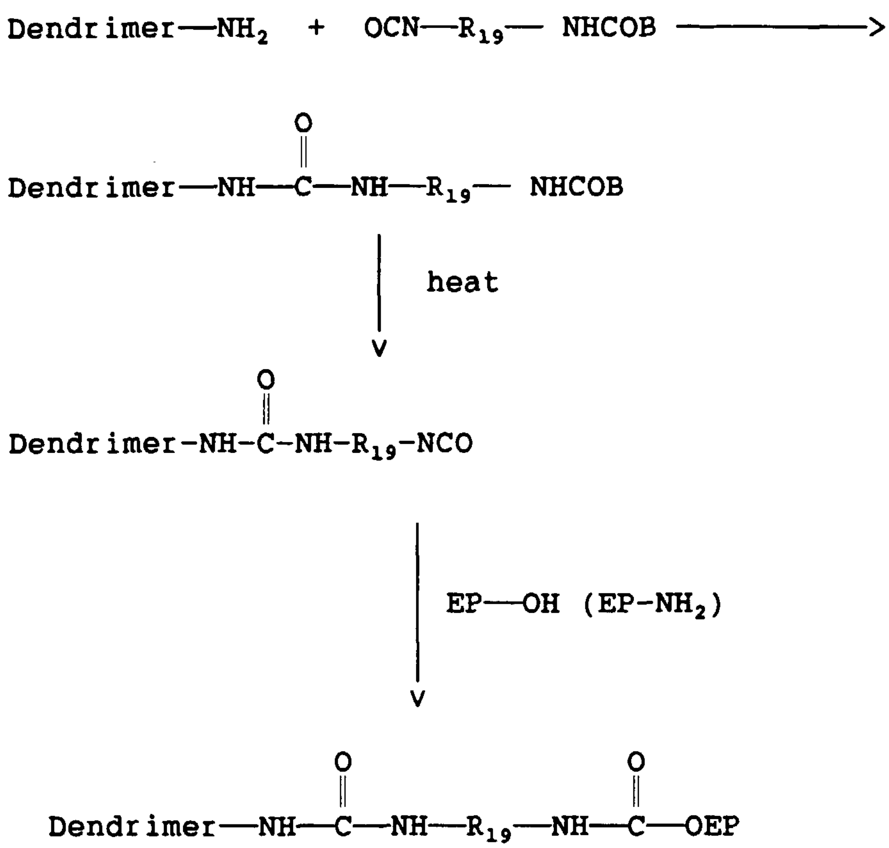


The group -NHCOB- in the above reaction sequence represents a blocked isocyanate function and $R_{19}$ is the remainder of the isocyanate and, preferably, is an alkyl, aryl, cycloalkyl or alkylaryl group. The blocking molecule can be any of a variety of molecules with an active hydrogen. The blocking molecule can be removed thermally in a subsequent reaction at generally 150°C-250°C. Typical blocking molecules are phenol, ketoximes for example methylethyl ketoxime, secondary alcohols e.g. 2-ethyl hexanol, caprolactam. Reaction conditions to effect blocking and deblocking are well-known in the art.

As an alternative approach to the use of selectively blocked diisocyanates use can be made of vinyl isocyanates

for example isocyanatoethyl methacrylates (IEM) or m-isopropenyl α,α-dimethyl benzyl isocyanate (TMI). The isocyanate functionality of the IEM or TMI is preferably blocked then incorporated into the dendrimer molecule by way of the conventional Michael reaction with an amine (terminal) dendrimer. As described previously, the isocyanate function is then regenerated by subjecting the dendrimer to heat to effect deblocking and then reacted with an amine or hydroxy (terminal) polyolefin pre-arm as illustrated in the following equations:

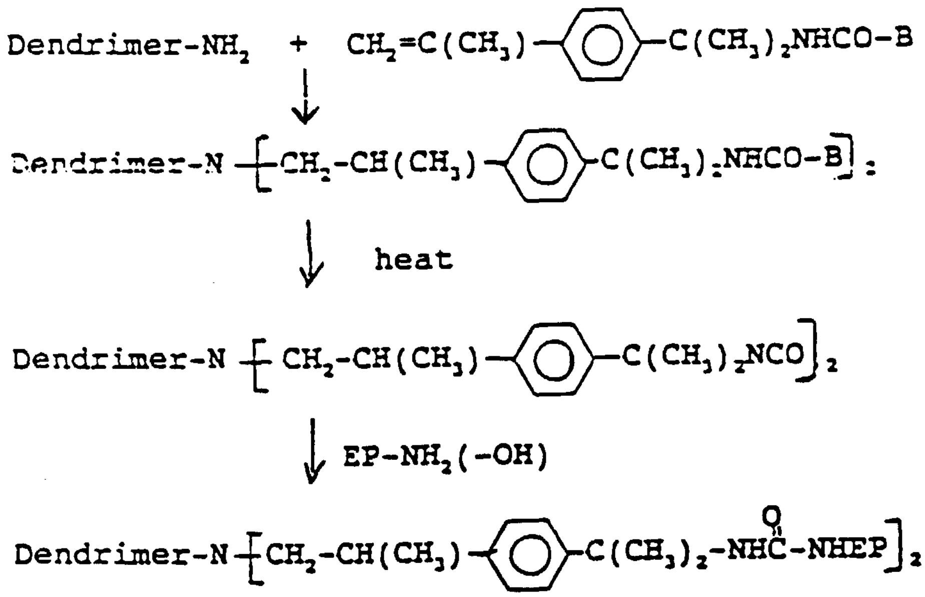


The number of polyolefin arms possible in the above type of polyolefin polymers is generally two times the number of amine (terminal) branches in the starting dendrimer and typically selection is made of dendrimers with 4 to 16 amine (terminal) branches.

Alternatively, the polyolefin pre-arm which has been derivatized to introduce to it either a hydroxy or an amine (terminal) group can be reacted with a selectively blocked multi-functional isocyanate or isothiocyanate. This so-obtained derivatized polyolefin pre-arm can be subjected to heat to deblock the isocyanate functionality and in a second reaction step then be reacted with the amine or hydroxy (terminal) groups of the dendrimer. The foregoing may be illustrated by way of the following:

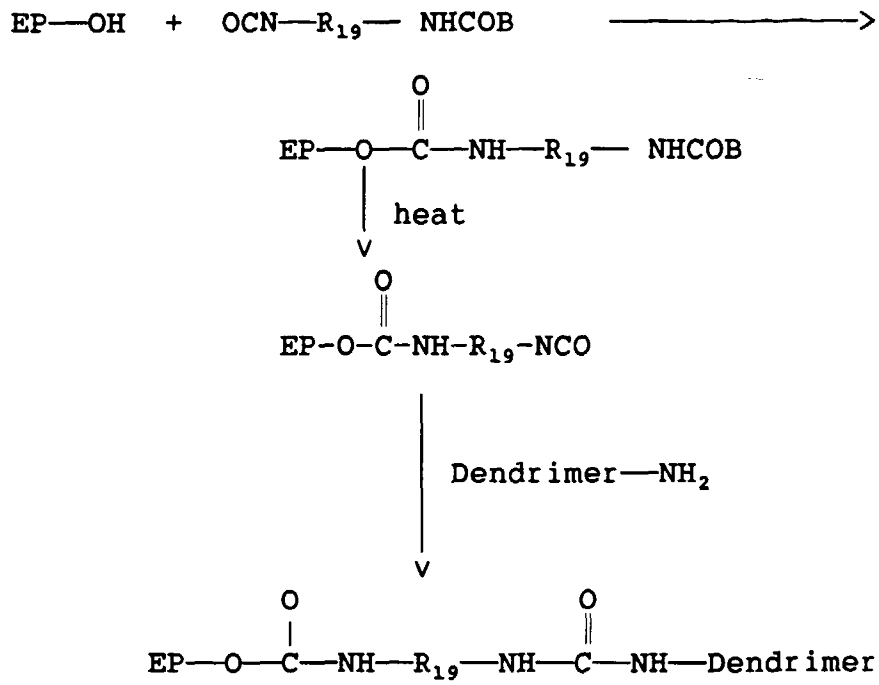


In both cases, the polyolefin pre-arm becomes coupled to the dendrimer backbone via urea urethane bonds.

As will be appreciated by those skilled in the art, instead of isocyanates, use can be made of other polyfunctional coupling compounds to chemically link the polyolefin pre-arms to the functional groups of the dendrimer. Also suitable as linking compounds are di- and tricarboxylic acids and their corresponding esters or anhydrides, amino alkyl alcohols and haloalkyl amines, haloalkyl alchols.

Particularly useful in the preparation of polyolefin polymers is the dendrimer-like backbone obtained from the Michael reaction of symmetrical polyamines with unsaturated polycarboxylic acid esters, for example the reaction of methyl itaconate with tris(ethylamino) benzene wherein the first generation product provides twelve carboxy sites for coupling of polyolefin arms. The first generation dendrimer can be expanded with alternating reactions of, for example, 1,4-diaminobutane and methylitaconate or the core amine, tris(ethylamino) benzene can be expanded with one or more generations of N-tosylaziridine to expand the number of arms. With methyl itaconate the number of branches is expanded by a factor of four for each amino group in the core or branched dendrimer backbone:

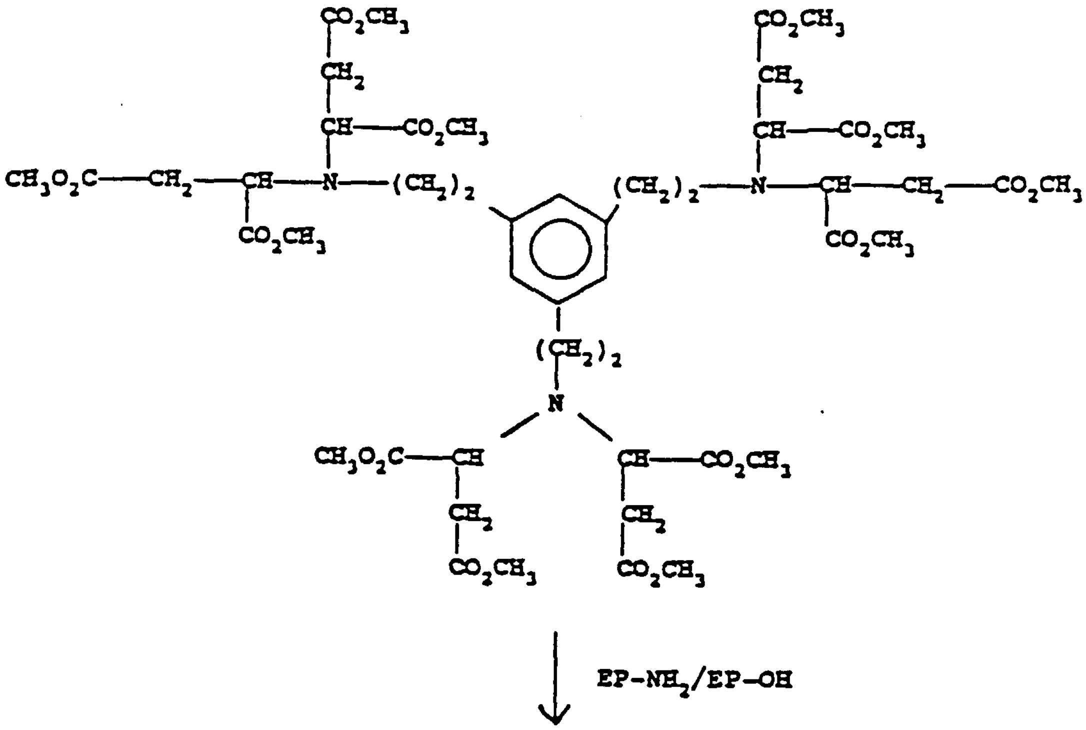


12 arm star

Useful as melamine derivatives in the preparation of dendrimer backbones are structures defined by the formula: wherein $R_{20}$ is $NH_2$-$(CH_2)_xOH$, -$(CH_2)_xNH_2$, -$NH(CH_2)_xCO_2H$, - $NH(CH_2)_xOH$, -$NH(CH_2)_xNH_2$ or -$COCH_3$, and x is 1-5.

In the typical preparation of a dendrimer, the reaction sequence is carried out in a stepwise manner. Therefore, it is possible to change the polyfunctional compound at any generation or half generation and introduce a different polyfunctional compound that will impart a special function or characteristic to the dendrimer backbone. In one embodiment of this concept, that special characteristic is antioxidant properties, such as those possessed by aromatic polyamine compounds. Thus, the polyfunctional reagent used in forming the last generation dendrimer should be one capable of reaction with aromatic polyamine compounds possessing antioxidant characteristics. Once the aromatic polyamine is reacted with the dendrimer, its generation can be repeated, the original generations can be repeated, or it can, in turn, be coupled with a polyolefin pre-arm to form a polyolefin polymer with anti-oxidant properties and a dendrimer molecule as the core or backbone.

This concept of the invention can be represented by a number of specific techniques. For example, it is possible to use, as the core, diaminobutane which can then be reacted with acrylonitrile followed by hydrogenation to form a first generation dendrimer as described previously. That dendrimer, after conversion to the corresponding amine, is reacted, in the next step, with a methylacrylate to form a half generation with the structure:

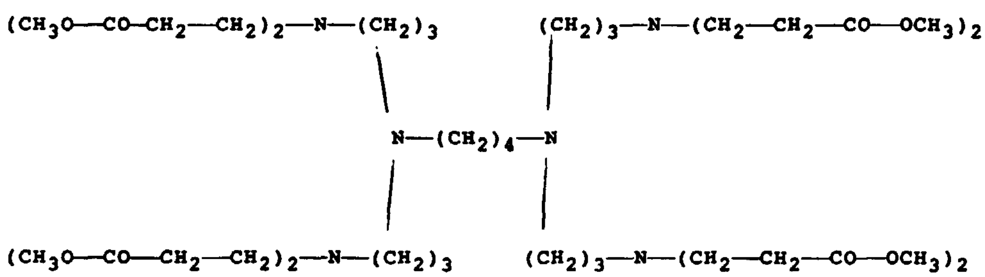

In the next step, the generation is completed for the above-described dendrimer by reaction with an aromatic polyamine compound having antioxidant properties. A number of such compounds is known, including 4,4'-diaminodiphenylamine. Other suitable compounds are aminoalkyl substituted phenothiazines; representative of the latter group is 4,4'bis-(2-aminoethyl)- phenothiazine. Those compounds, containing aromatic amine groups, are reactive with the (terminal) groups of the dendrimer containing the acetate groups to form the corresponding amides with the aromatic polyamines. The new dendrimer backbone is the product of that reaction and can be illustrated by way of the following:

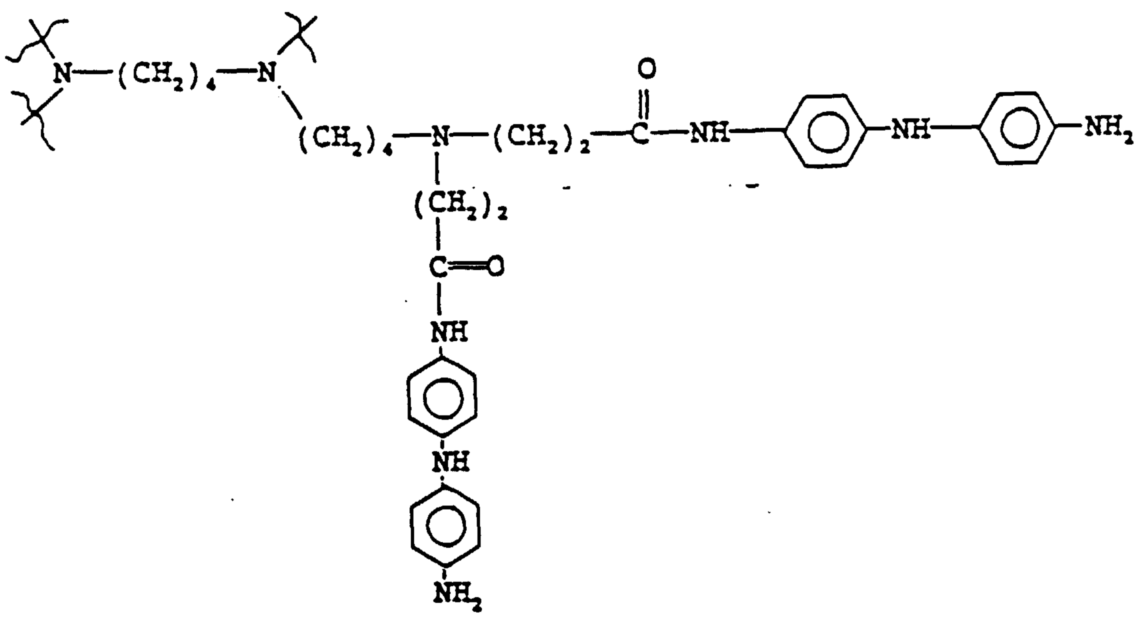

It will be understood that the unidentified bonds in the foregoing structure contain the same groups.

The dendrimer backbone, containing (terminal) amine groups, can then be reacted with a functionalized polyolefin pre-arm containing, for example, a (terminal) maleic anhydride group to thereby couple the polyolefin pre-arm to the amine groups to form an imide linking the polyolefin pre-arm to the dendrimer structure. The macromolecules thus contain both the polyolefin arm, as well as an aromatic polyamine group to improve the antioxidant characteristics of the dendrimer. It will be noted that each branch of the polymer containing the polyolefin arm also contains an aromatic polyamine group in a one-to-one distribution.

As will be appreciated by those skilled in the art, instead of the 4,4'bis-(2-aminoethyl)phenothiazine, use can also be made of the phenothiazines described above, as well as other aromatic polyamine compounds.

As will also be appreciated by those skilled in the art, other sequences of reagents in forming the dendrimer may likewise be used. It is important, however, that the immediately preceding dendrimer prior to reaction with the aromatic polyamine compound has a functional group which is reactive with the aromatic polyamine group so as to incorporate the antioxidant-containing aromatic polyamine compound into the dendrimer molecule. As will also be appreciated by those skilled in the art, other coupling mechanisms previously described may likewise be used to couple the polyolefin pre-arm to the (terminal) amine of this type of dendrimer molecule. Instead of a polyolefin pre-arm containing a maleic anhydride group, it is also possible to employ a polyolefin pre-arm functionalized with a (terminal) expoxy group or a (terminal) carboxylic acid or an acid chloride group or a tosylate.

As an alternative technique one can couple the polyolefin pre-arm directly via a polymerization reaction by incorporation of difunctional polymerizable monomers in the form of vinyl isocyanates. Examples of such monomers are IEM and TMI as previously described. In accordance with this embodiment, the amine or hydroxy (terminal) polyolefin is directly reacted with the TMI or IEM via the isocyanate functionality to provide a new unsaturated polyolefin pre-arm with an urea, urethane bond. The unsaturation in this new pre-arm can be subjected to conventional free radical or anionic polymerization conditions either alone or in combination with other styrene-like or (meth)acrylate-like comonomers known to undergo such copolymerization reactions. Branched polymers as thus described can be exemplified by the following equation using styrene and methyl methacrylate as comonomers:

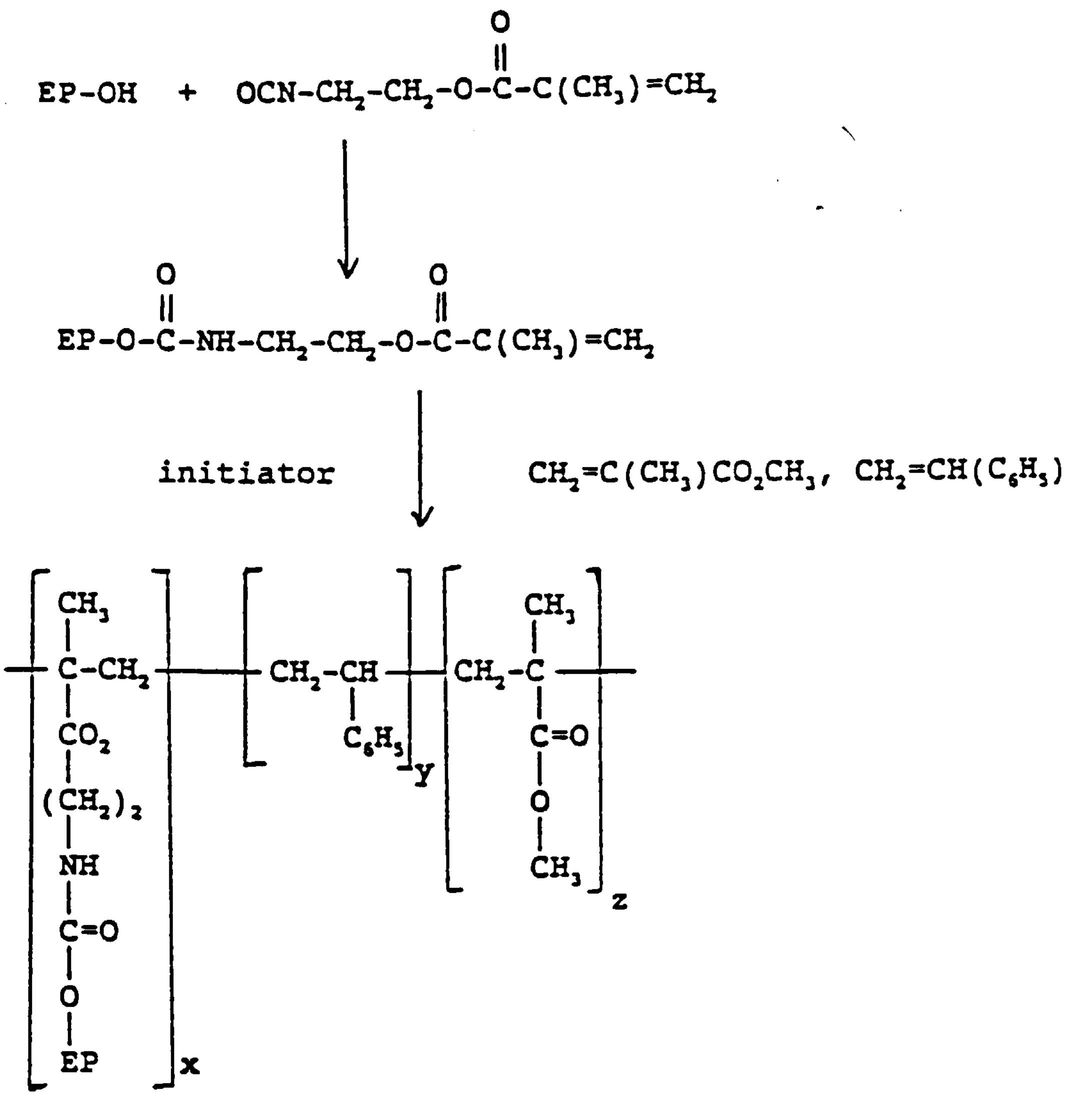


wherein x is 5 to 30 weight percent IEM derivatized polyolefin arm, y is 25 to 65 weight percent styrene and z is 30 to 70 weight percent methylmethacrylate.

It is also possible, in accordance with a further embodiment of the invention, to utilize, in forming a reactive polymeric backbone, multifunctional isocyanates or extended isocyanates. One technique that can be employed is based on the known ability of isocyanates to trimerize to form a very stable six-membered ring structure. Such compounds are known as isocyanurates, and have the structure:

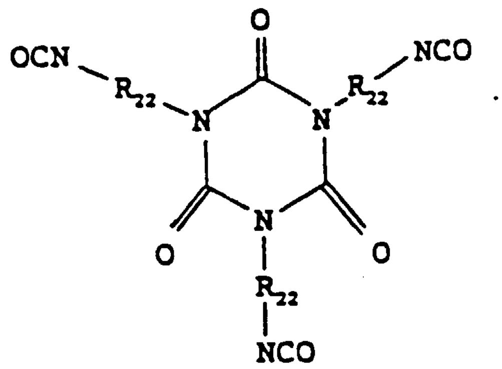

wherein each $R_{22}$ group is an alkyl group of 1 to 8 carbons, an aryl group, an alkyl phenyl group. Some more common isocyanurates commerically available are the trimers from the trimerization of 1,6-diisocyanato hexamethylene, 2,4-toluene diisocyanate, isophoronediisocyanate, toluidine diisocyanate, 4,4'dicyclo-hexylmethane diisocyanate. The isocyanurate can be reacted with an amine or hydroxy (terminal) polyolefin pre-arm to provide a branched polyolefin with three arms. Alternatively, as more typical with higher molecular weight polyolefins, the reaction can stop after the incorporation of one to two arms providing instead a "linear polyolefin". Those "linear polyolefins" can be coupled with a monomer having multi-hydroxy or multi-amine functions, as provided by simple polyols and melamines or its derivatives as previously defined. Polyols useful in the practice of this invention include glycerine, glycols, penta-erythritol, Pluracol® polyols, benzenes, tris(alkyl- amino) benzene, trimethylolpropane, trihydroxybenzene, triaminobenzene, first generation dendrimer like molecules formed by reaction of diamines (or poly amines) with ethylene oxide, such as Quadrols® (trademark of BASF Wyandotte Corporation) tricarboxylic acids, etc. Branched polyolefins with 6 to 24 arms coupled by way of an urea/urethane linkage are conveniently prepared.

Use of "extended isocyanates" as a backbone of this invention relies on the reaction of selective diisocyanates with polyols or melamines followed by a secondary trimerization with the corresponding selectively blocked diisocyanate as represented in the following equation when an excess of toluene diisocyanate is reacted with pentaerythritol:

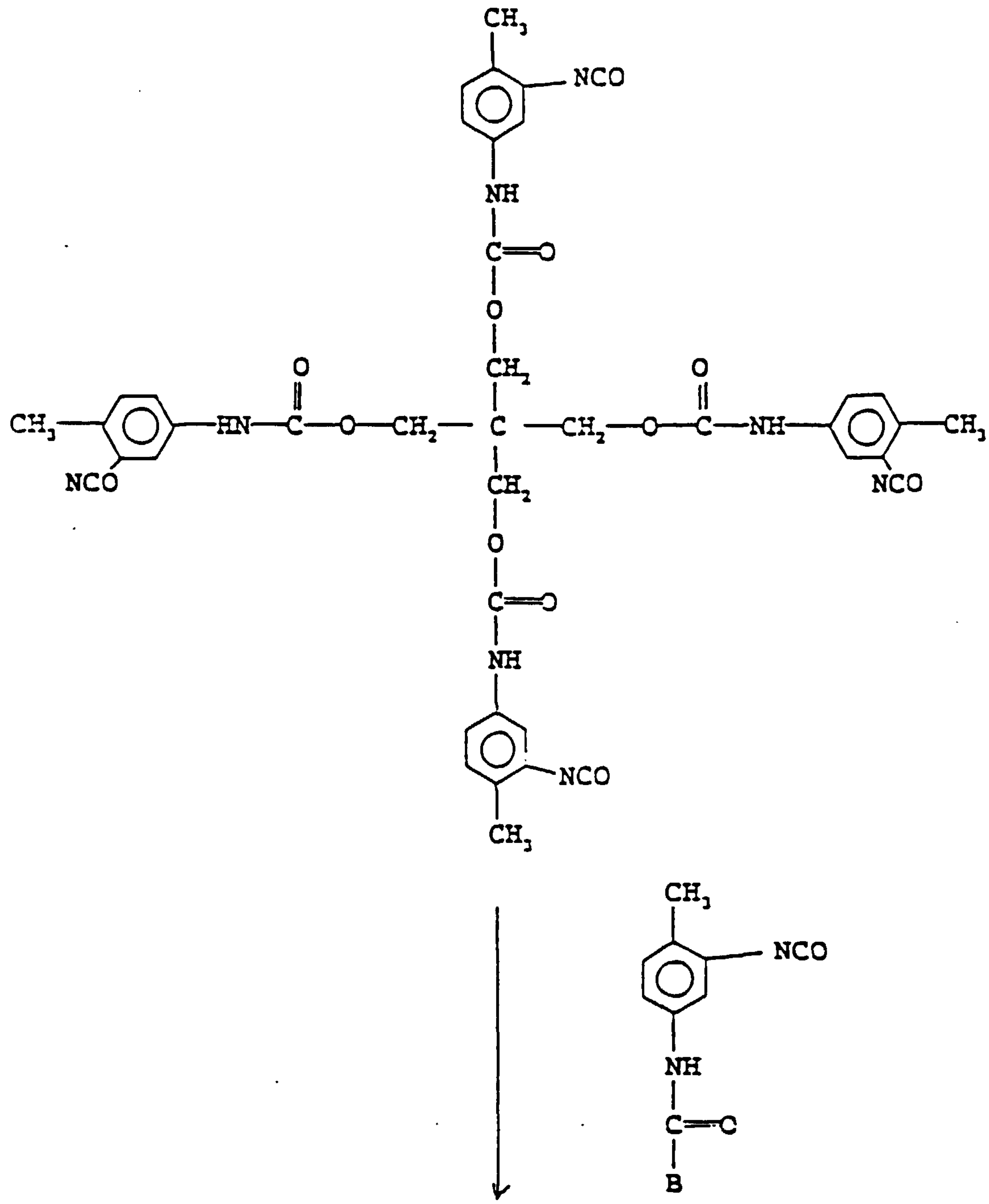

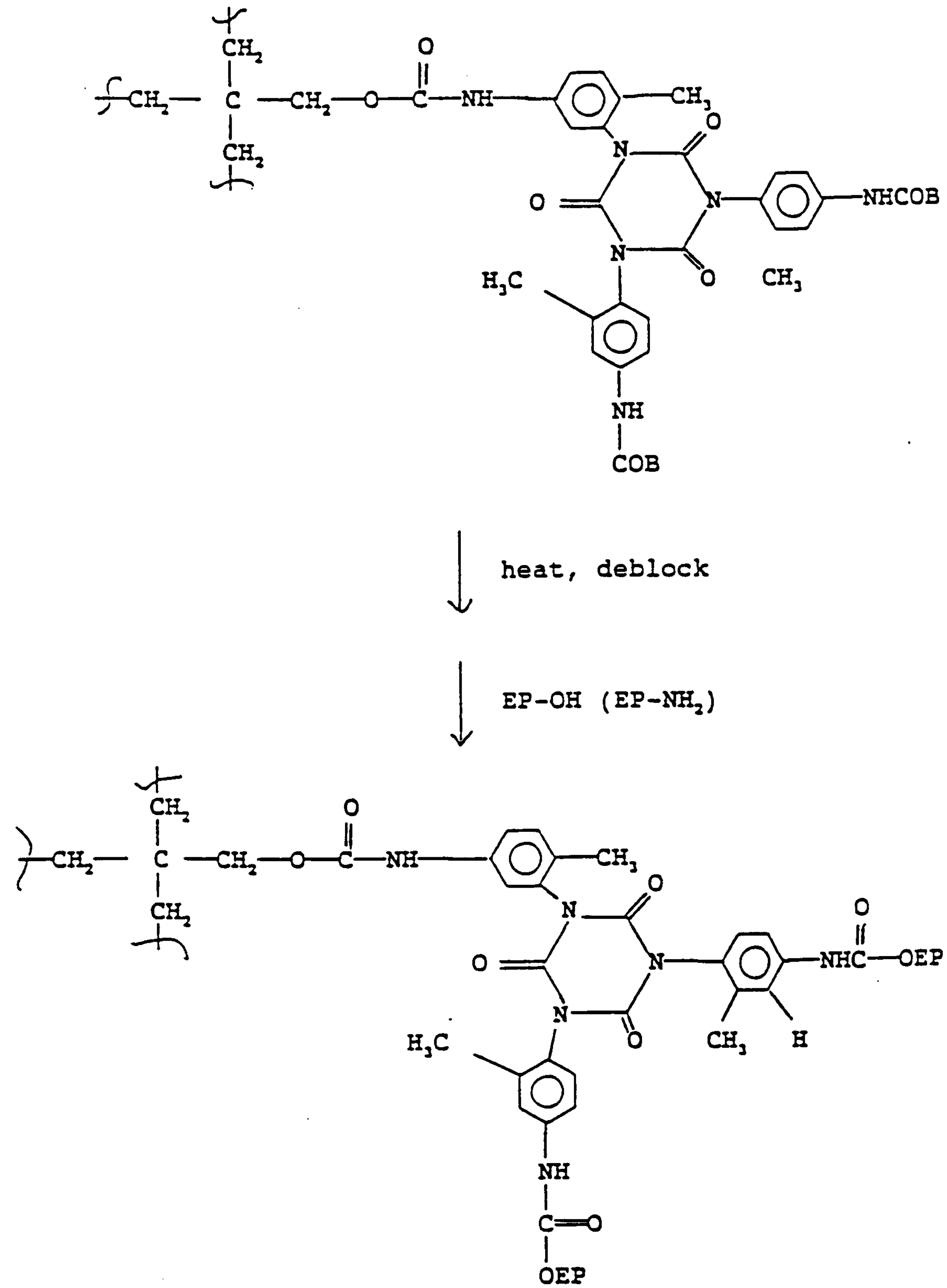


By "selective diisocyanate" it is understood in the art that the two NCO groups are not equally reactive, that is, one of the NCO groups will preferably undergo blocking and trimerization reactions, leaving the other NCO for later chemical modification. Toluene diisocyanate and isophorone diisocyanate (see J. Coatings Technology, Vol. 54, no. 687, 1982,

pg. 43) are examples of selective diisocyanates.

An "extended isocyanate" backbone can also be prepared by alternating the reactions of polyols and selective diisocyanates. An example of this type of backbone is formed by the reaction of first trimethylol propane with toluene diisocyanate. Initially the para NCO group reacts exclusively. Further reaction of this isocyanurate with pentaerythritol provides a core molecule with nine hydroxy groups. These can be reacted with an equivalent of toluene diisocyanate to provide a branched backbone with nine isocyanate groups, which, when reacted with hydroxy or amino (terminal) polyolefins, generates a nine arm star branched polyolefin. Reaction of an isocyanurate or other triisocyanates with other polyols and selective diisocyanates in sequence can generate a backbone with six to fifteen arms.

Polyolefin polymers of the present invention, once formed, are stable and can be modified by additional chemical reactions. One such reaction is functionalization by means of a free radical graft reaction or a graft polymerization reaction. Polyolefin grafted polymers are themselves well known to those skilled in the art. Similar chemical reactions can be used to graft the polyolefin polymers of this invention. Suitable graft monomers include unsaturated dicarboxylic acid anhydrides and their corresponding acids, preferably those having the general formula:

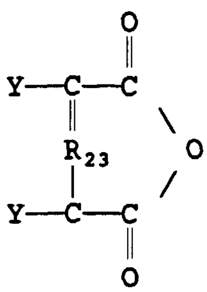

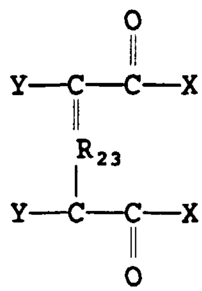

wherein $R_{23}$ is an alkyl group having 0 to 4 carbon atoms and Y is preferably hydrogen but may also be an organic group such as a branched or straight chain alkyl group, an anhydride, a ketone group, a heterocyclic group or other organic group containing 1 to 12 carbon atoms. In addition, Y can be a halogen such as chlorine, bromine or iodine. X can be OH or an alkoxy group wherein the alkyl group contains 1 to 8 carbon atoms. Preferred among those graft monomers are maleic anhydride or itaconic anhydride.

Also suitable as the graft monomer for functionalizing a polyolefin polymer are the derivatives of olefinically unsaturated carboxylic monomers such as, acrylic or methacrylic acid, or their esters, graft monomers which are likewise known to those skilled in the art. Typically, an acrylic or methacrylic acid derivative contains 4 to 16 carbon atoms. Preferred among the acrylic or methacrylic acid graft monomers are those having the structure:

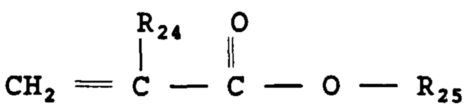

wherein $R_{24}$ is hydrogen or $C_1$ to $C_4$ alkyl (e.g., methyl, ethyl, etc.) and $R_{25}$ is selected from the group consisting of a $C_1$ to $C_8$ alkyl group, a keto functional alkyl group, an epoxy functional alkyl group, $-NH_2$ or $-NR'_2$ where R' can be H or $C_1$ to $C_8$ hydrocarbon and both R' groups need not be the same. Particularly preferred among the group of acrylic or methacrylic graft monomers are glycidyl methacrylate, methylacrylate, methylmethacrylate, ethylmethacrylate, aminopropylmethacrylate or acrylamide.

Another group of graft monomers which can be used to functionalize a polyolefin polymer are vinyl amines containing 2 to 25 carbon atoms and preferably heterocyclic vinyl amines. Such amines are themselves known as functionalizing graft monomers and include allyl amines, N-vinyl pyridines, N-vinyl pyrrolidones, vinyl lactams, vinyl carbazoles, vinyl imidazoles and vinyl thiazoles as represented by 2-vinyl pyridine, N-vinyl pyrrolidone, vinyl caprolactam, 1-vinyl imidazole, allyl amine, 4-methyl-5-vinyl thiazole and 9-vinyl carbazole. Such graft monomers are described in detail in USP 4,340,689, the disclosure of which is incorporated herein by reference.

As it will be appreciated by those skilled in the art, other vinyl monomers described in the prior art as suitable for functionalizing a polyolefin polymer may likewise be used in the practice of the present invention. Examples of further vinyl compounds are the vinyl silanes and vinylbenzyl halides as represented by vinyltrimethoxysilane, vinyldiethychlorosilane, vinylbenzylchloride and the like. Further descriptions of suitable silane graft monomers are described in USP 4,340,689, the disclosure of which is incorporated herein by reference.

The invention also relates to a composition comprising a polyolefin polymer according to the invention. It has, in some cases, been found advantageous to make use of a polyolefin polymer according to the invention as a part of a composition to improve the mechanical properties, especially the abrasion resistance and/or processability. The composition will, besides the polymer according to the invention, comprise one or more other polymer(s). Those other polymers can for example be chosen from the group comprising homo- and copolymers of ethylene, propylene, butene, hexene and octene. Preferably polyethylene, more preferably ultra-high molecular weight polyethylene, is used as the other polymer in the composition. The composition according to the invention can besides the polyolefin polymer according to the invention and the other polymer also contain unreacted pre-arms. It has appeared that the presence of these unreacted pre-arms is not always detrimental to the properties of the composition. For the man skilled in the art it is not difficult to determine whether the presence of the unreacted pre-arms has an adverse effect on the properties of the composition. In the case the properties are adversely effected, the polymer according to the invention should be disposed of these unreacted pre-arms. The man skilled in the art is familiar with techniques to separate the unreacted pre-arms from the polyolefin according to the invention.

The invention also relates to an article made of a polyolefin polymer according to the invention. The article made of (a composition comprising) such a polyolefin polymer has better mechanical properties than an article made of traditional polymers that are equally well processable. Examples of articles that benefit especially from the improved mechanical properties of the polyolefin polymer according to the invention are for example bearings, gears, fibers, pressure pipe, large-part mouldings, grocery sacks, can liners, chemical pump parts, gaskets, filters, feed screws, guide rails, rollers and bushings.

The following examples are provided to illustrate the invention, without being limited thereto.

The composition of the polymer was determined by means of Fourler Transform Infrared Spectroscopy. The molecular weight of the polymer was determined with Size Exclusion Chromatography-Differential Viscometry (SEC-DV) at a temperature of 150°C using 1,2,4-trichlorobenzene as solvent. The SEC-DV technique was used to calculate the number average molecular weight ($M_n$), the weight average molecular weight ($M_w$) and the molecular weight distribution ($MWD = M_w/M_n$). The type and degree of (terminal) unsaturation was determined by Proton Nuclear Magnetic Resonance Spectroscopy ($^1$H-NMR) and are reported as groups per 100,000 carbon atoms.

For the determination of the abrasion resistance, experiments were performed according to DIN 53754 (Tabèr abrasion). In stead of the mentioned form and size of the test piece in the DIN-norm, a square test piece of 120*120 mm was used.

Examples

Example I

A high density polyethylene (density 0.962 g/cm$^3$, $M_w$= 150*10$^3$ g/mol, MWD= 7.6, unsaturation: trans 2; end 76; side 7) was dissolved in pentamethylheptane (8 wt% polymer). Poly(methylhydrogensiloxane) (PMHS) containing an average of 25 SiH groups per molecule was added to the polymer solution to provide a molar ratio of C=C in the polymer to SiH of 0.2. Additionally tetramethyltetravinylcyclotetrasiloxane (TMTVS) was added to the reaction mixture to provide a molar ratio of C=C in the TMTVS to SiH of 0.4. The reaction mixture was subsequently heated to 140°C. The catalyst solution was prepared by dissolving $H_2PtCl_6.6H_2O$ in isopropanol. Dichlorophenyl acetic acid ethyl ester (DCPAE) was added to this catalyst solution as to provide a molar ratio of DCPAE to platinum in the catalyst of 10. Afterwards the catalyst solution was added to the polymer solution in a molar ratio of Pt to C=C in the polymer of 1/1000. The reaction mixture was stirred at 140°C for 24 hours. After this time, the reaction was blocked with an excess of 1-decene. The polymer recovered after evaporation of the solvent under vacuum at 80°C was analyzed with SEC-DV to have a weight average molecular weight of 360*10$^3$ g/mol and an MWD of 3.4.

After a test piece from this polyolefin polymer was made, it was subjected to the Tabèr abrasion test. The weight of the test piece at the beginning of the test was 27.1045 g, the average weight loss was determined according to DIN 53754 and amounted 14.6 mg.

Comparative Experiment A

A test piece having the same linear dimensions as in Example I was made from a commercial available ultrahigh molecular weight polyethylene (UHMW-PE, Stamylan® UH210) with a density of 0.93 g/cm$^3$. This test piece was subjected to a Tabèr abrasion test as described above. The weight of the test piece at the beginning of the test was 27.3839 g, the average weight loss was determined in the same way as in Example I. It amounted 14.8 mg.

Comparative Experiment B

A test piece having the same linear dimensions as in Example I was made from the same high density polyethylene as was used in Example I as pre-arms. This test piece was subjected to a Tabèr abrasion test as described above. The weight of the test piece at the beginning of the test was 24,6330 g, the average weight loss was determined in the same way as in Example I. It amounted 20.4 mg.

**Claims**

1. Polyolefin polymer in the form of a comb, star, nanogel or structural combinations thereof comprising a plurality of polyolefin arms, each independently selected from the group consisting-of homo- and copolymers of substituted and unsubstituted 1-alkenes, coupled to a polymeric backbone, said backbone having repeating units containing a group selected from the group consisting of aliphatic groups, aromatic groups, heteroatom-containing groups and combinations thereof, the polyolefin polymer having a weight average molecular weight ($M_w$) of at least $250*10^3$ g/mol and less than $800*10^3$ g/mol, the polyolefin arm, before coupling, having a molecular weight ($M_w$) of at least $20*10^3$ g/mol, the ratio between the molecular weight ($M_w$) of the polyolefin polymer and the molecular weight of the polyolefin arm, before coupling, ($M_{w,\ polymer}/M_{w,\ arm}$) being higher than 2 and the molecular weight distribution of the polyolefin arm, before coupling, being at least 2 and at most 20.

2. Polyolefin polymer according to claim 1, characterized in that the polyolefin pre-arms are each independently selected from the group consisting of homo- or copolymers of 1-alkenes with 2 to 20 carbon atoms.

3. Polyolefin polymer according to claim 2, characterized in that the polyolefin pre-arms are each independently selected from the group consisting of homo- or copolymers of 1-alkenes with 2, 4, 6, or 8 carbon atoms.

4. Polyolefin polymer according to claim 1, characterized in that the polyolefin pre-arms consist of polyethylene.

5. Polyolefin polymer according to anyone of claims 1-4, characterized in that the backbone is a polysiloxane.

6. Polyolefin polymer according to anyone of claims 1-5, characterized in that the molecular weight ($M_w$) of the polymer is at least $300*10^3$ and at most $700*10^3$ g/mol.

7. Polyolefin polymer according to claim 6 characterized in that the molecular weight ($M_w$) of the polymer is at least $350*10^3$ and at most $600*10^3$ g/mol.

8. Polyolefin polymer according to anyone of claims 1-7, characterized in that the weight average molecular weight ($M_w$) of the polyolefin pre-arms is at least $30*10^3$ and at most $200*10^3$ g/mol.

9. Polyolefin polymer according to claim 8 characterized in that the weight average molecular weight ($M_w$) of the polyolefin pre-arms is at least $50*10^3$ and at most $150*10^3$ g/mol.

10. Polyolefin polymer according to anyone of claims 1-9, characterized in that the ratio between the molecular weight ($M_w$) of the polyolefin polymer and the molecular weight ($M_w$) of the pre-arm is at least 5.

11. Polyolefin polymer according to claim 10, characterized in that the ratio is at least 10.

12. Polyolefin polymer according to anyone of claims 1-11, characterized in that the polyolefin pre-arms contain terminal unsaturation.

13. Polyolefin polymer according to anyone of claims 1-12, characterized in that the molecular weight distribution of the pre-arm is at least 2.5 and at most 16.

14. Polyolefin polymer according to claim 13, characterized in that the molecular weight distribution of the pre-arm is at least 6 and at most 15.

15. Composition comprising a polyolefin polymer according to anyone of claims 1-14.

16. Article made of a polyolefin polymer or of a polymer composition according to anyone of claims 1-15.

European Patent Office

# EUROPEAN SEARCH REPORT

Application Number
EP 97 20 0240

| Category | Citation of document with indication, where appropriate, of relevant passages | Relevant to claim | CLASSIFICATION OF THE APPLICATION (Int.Cl.6) |
|---|---|---|---|
| X | US 5 395 885 A (KENNEDY JOSEPH P ET AL) 7 March 1995<br>* claim 1 *<br>* column 11, line 43 - line 44 *<br>* table 1 * | 1-3 | C08G81/02<br>C08G77/442<br>C08F283/12 |
| A | JOURNAL OF MACROMOLECULAR SCIENCE-PURE AND APPLIED CHEMISTRY,<br>vol. A31, no. 12, 1994,<br>pages 1943-1953, XP000677853<br>LUBNIN A.V. ET AL: "Designed T- and Comb-shaped Copolymers of poly(ethylene oxide) and polyisobutylene"<br>*abstract* | 1 | |
| A | WO 87 03603 A (EXXON RESEARCH ENGINEERING CO) 18 June 1987<br>* claims 40-42 * | 1 | |
| A | PATENT ABSTRACTS OF JAPAN<br>vol. 018, no. 163 (C-1181), 18 March 1994<br>& JP 05 331243 A (JAPAN SYNTHETIC RUBBER CO LTD), 14 December 1993,<br>* abstract * | 1 | TECHNICAL FIELDS SEARCHED (Int.Cl.6)<br>C08G<br>C08F |
| A | EP 0 205 096 A (SUNSTAR ENGINEERING INC) 17 December 1986<br>* claim 1 * | 1 | |
| A | EP 0 621 293 A (ROEHM GMBH) 26 October 1994<br>* claim 1 * | 1 | |
| E | WO 97 06201 A (DSM NV ;JANSSEN KOEN JAN GERARDA (BE); RADEMAKERS GERARDUS ARNOLDU) 20 February 1997<br>* claims 1,13,15-17,36-38 *<br>* page 5, line 34 - page 6, line 10 * | 1-5 | |

The present search report has been drawn up for all claims

| Place of search | Date of completion of the search | Examiner |
|---|---|---|
| THE HAGUE | 17 July 1997 | Niaounakis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)